(19) Europäisches Patentamt
European Patent Office
Office européen des brevets

(11) EP 4 574 915 A1

(12) **EUROPEAN PATENT APPLICATION**
published in accordance with Art. 153(4) EPC

(43) Date of publication:
**25.06.2025 Bulletin 2025/26**

(21) Application number: **23854883.8**

(22) Date of filing: **14.08.2023**

(51) International Patent Classification (IPC):
***C09J 133/00*** *(2006.01)* ***C09J 7/38*** *(2018.01)*

(52) Cooperative Patent Classification (CPC):
**C09J 7/24; C09J 7/38; C09J 133/00**

(86) International application number:
**PCT/JP2023/029451**

(87) International publication number:
**WO 2024/038849 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.08.2022 JP 2022131393**

(71) Applicant: **NITTO DENKO CORPORATION**
**Ibaraki-shi**
**Osaka 567-8680 (JP)**

(72) Inventors:
- **MOTEGI, Yusuke**
  **Ibaraki-shi, Osaka 567-8680 (JP)**
- **MATSUMOTO, Masamichi**
  **Ibaraki-shi, Osaka 567-8680 (JP)**
- **MITSUI, Kazuma**
  **Ibaraki-shi, Osaka 567-8680 (JP)**
- **SAWAZAKI, Ryohei**
  **Ibaraki-shi, Osaka 567-8680 (JP)**

(74) Representative: **Grünecker Patent- und Rechtsanwälte**
**PartG mbB**
**Leopoldstraße 4**
**80802 München (DE)**

# (54) ADHESIVE COMPOSITION, ADHESIVE LAYER, ADHESIVE SHEET, OPTICAL MEMBER WITH ADHESIVE LAYER, IMAGE DISPLAY DEVICE AND TOUCH PANEL

(57) An object of the present invention is to provide: an acrylic pressure-sensitive adhesive composition for forming a pressure-sensitive adhesive layer used for laminating an optical member of an image display device, the acrylic pressure-sensitive adhesive composition capable of forming a pressure-sensitive adhesive layer that is not susceptible to cloudiness due to humidification even under high temperature and humidification conditions; a pressure-sensitive adhesive layer; a pressure-sensitive adhesive sheet; an optical member with pressure-sensitive adhesive layer; an image display device; and a touch panel. The acrylic pressure-sensitive adhesive composition of the present invention is an acrylic pressure-sensitive adhesive composition for forming a pressure-sensitive adhesive layer used for laminating an optical member of an image display device, wherein the moisture amounts $W_1$ and $W_2$ after subjecting the pressure-sensitive adhesive layer to the conditions (A) and (B) below, respectively, satisfy the following expression (1):

$$W_2/W_1 > 1 \quad \ldots \quad (1)$$

(A) the moisture amount when the pressure-sensitive adhesive layer is stored under conditions of 23°C and 50% RH for 24 hours: $W_1$ ($\mu g/cm^2$); and
(B) the moisture amount when the pressure-sensitive adhesive layer after (A) is stored under conditions of 85°C and 85% RH for 8 hours and then stored under conditions of 23°C and 50% RH for 24 hours: $W_2$ ($\mu g/cm^2$).

Fig. 4

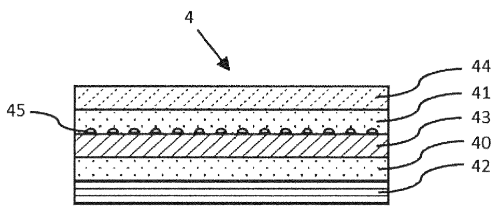


EP 4 574 915 A1

## Description

### Technical Field

The present invention relates to a pressure-sensitive adhesive composition, a pressure-sensitive adhesive layer, a pressure-sensitive adhesive sheet, an optical member with pressure-sensitive adhesive layer, an image display device, and a touch panel.

### Background Art

In recent years, image display devices such as liquid crystal displays (LCDs) and organic electroluminescence displays (OLEDs), as well as touch panels in which touch sensors are incorporated in these image display devices, have been widely used in various fields. Such image display devices and touch panels have a configuration in which various optical members such as polarizing films, retardation films, optical compensation films, touch sensor films, and cover films are laminated on an image display panel. A pressure-sensitive adhesive sheet having a pressure-sensitive adhesive layer is used in applications for laminating these optical members. For example, transparent pressure-sensitive adhesive sheets are used for laminating various optical members in image display devices (see, for example, Patent Literatures 1 to 3).

### Citation List

### Patent Literatures

Patent Literature 1: Japanese Patent Laid-Open No. 2003-238915
Patent Literature 2: Japanese Patent Laid-Open No. 2003-342542
Patent Literature 3: Japanese Patent Laid-Open No. 2004-231723

### Summary of Invention

### Technical Problem

For the lamination of optical members, optical members with pressure-sensitive adhesive layer, in which a pressure-sensitive adhesive sheet is laminated on the optical members, are generally used. When the optical members with pressure-sensitive adhesive layer are laminated on a glass substrate or the like and placed under high temperature and high humidity conditions, such as 85°C and 85% RH, and then returned to normal temperature, there may occur a phenomenon that the pressure-sensitive adhesive layer becomes cloudy (cloudiness due to humidification). When cloudiness due to humidification occurs, it causes a reduction in the visibility of the image display device.

Accordingly, an object of the present invention is to provide an acrylic pressure-sensitive adhesive composition for forming a pressure-sensitive adhesive layer used for laminating an optical member of an image display device, the acrylic pressure-sensitive adhesive composition capable of forming a pressure-sensitive adhesive layer that is not susceptible to cloudiness due to humidification even under high temperature and humidification conditions.

Another object of the present invention is to provide a pressure-sensitive adhesive layer that is not susceptible to cloudiness due to humidification even under high temperature and humidification conditions.

Another object of the present invention is to provide a pressure-sensitive adhesive sheet having a pressure-sensitive adhesive layer that is not susceptible to cloudiness due to humidification even under high temperature and humidification conditions.

Another object of the present invention is to provide an optical member with pressure-sensitive adhesive layer having a pressure-sensitive adhesive layer that is not susceptible to cloudiness due to humidification even under high temperature and humidification conditions.

Another object of the present invention is to provide a high-performance image display device and a touch panel that comprise the optical member with pressure-sensitive adhesive layer and the visibility of which is unlikely to deteriorate even under high temperature and humidification conditions.

### Solution to Problem

A first aspect of the present invention provides an acrylic pressure-sensitive adhesive composition for forming a

pressure-sensitive adhesive layer used for laminating an optical member of an image display device. Herein, the acrylic pressure-sensitive adhesive composition of the first aspect of the present invention may be referred to as "the acrylic pressure-sensitive adhesive composition of the present invention" or simply as "the pressure-sensitive adhesive composition of the present invention".

The acrylic pressure-sensitive adhesive composition of the present invention is used for laminating optical members such as polarizing films, retardation films, optical compensation films, touch sensor films, and cover films on an image display panel in image display devices such as liquid crystal displays (LCDs) and organic electroluminescence displays (OLEDs), as well as touch panels in which touch sensors are incorporated in these image display devices, or for forming a pressure-sensitive adhesive layer used for laminating these optical members to each other.

For the lamination of optical members, optical members with pressure-sensitive adhesive layer, in which a pressure-sensitive adhesive sheet is laminated on the optical members, are generally used. When the optical members with pressure-sensitive adhesive layer are laminated on a glass substrate or the like and placed under high temperature and high humidity conditions, such as 85°C and 85% RH, and then returned to normal temperature, there may occur a phenomenon that the pressure-sensitive adhesive layer becomes cloudy (cloudiness due to humidification). When cloudiness due to humidification occurs, it causes a reduction in the visibility of the image display device.

In the acrylic pressure-sensitive adhesive composition of the present invention, the moisture amounts $W_1$ and $W_2$ after subjecting the pressure-sensitive adhesive layer to the conditions (A) and (B) below, respectively, satisfy the following expression (1):

$$W_2/W_1 > 1 \quad ... \quad (1)$$

(A) the moisture amount when the pressure-sensitive adhesive layer is stored under conditions of 23°C and 50% RH for 24 hours: $W_1$ (μg/cm$^2$); and

(B) the moisture amount when the pressure-sensitive adhesive layer after (A) is stored under conditions of 85°C and 85% RH for 8 hours and then stored under conditions of 23°C and 50% RH for 24 hours: $W_2$ (μg/cm$^2$).

The moisture amounts $W_1$ and $W_2$ satisfy the above expression (1). That is, the moisture amount $W_2$ is larger than the moisture amount $W_1$. Such a configuration is preferable from the viewpoint that even if the pressure-sensitive adhesive layer is returned to normal temperature after being placed under high temperature and high humidity conditions, cloudiness due to humidification is unlikely to occur, and the visibility of the image display device can be maintained.

In the acrylic pressure-sensitive adhesive composition of the present invention, the moisture amounts $W_1$ and $W_3$ after subjecting the pressure-sensitive adhesive layer to the conditions (A) and (C) below, respectively, preferably satisfy the following expression (2):

$$W_3/W_1 > 2.3 \quad ... \quad (2)$$

(A) the moisture amount when the pressure-sensitive adhesive layer is stored under conditions of 23°C and 50% RH for 24 hours: $W_1$ (μg/cm$^2$); and

(C) the moisture amount when the pressure-sensitive adhesive layer after (A) is stored under conditions of 85°C and 85% RH for 8 hours: $W_3$ (μg/cm$^2$).

The configuration in which the $W_3/W_1$ satisfies the above expression (2), that is, the $W_3/W_1$ is larger than 2.3, is preferable from the viewpoint that the $W_2/W_1$ easily satisfies the above expression (1), and even if the pressure-sensitive adhesive layer is returned to normal temperature after being placed under high temperature and high humidity conditions, cloudiness due to humidification is unlikely to occur, and the visibility of the image display device can be maintained.

It is preferable that the acrylic pressure-sensitive adhesive composition of the present invention contain an acrylic polymer and that the acrylic polymer contain 10 to 40 parts by weight of a functional group-containing monomer based on the total amount of the monomer components constituting the acrylic polymer (100 parts by weight). Such a configuration is preferable from the viewpoint that the $W_2/W_1$ easily satisfies the above expression (1), and even if the pressure-sensitive adhesive layer is returned to normal temperature after being placed under high temperature and high humidity conditions of 85°C and 85% RH, cloudiness due to humidification is unlikely to occur, and the visibility of the image display device can be maintained.

The acrylic pressure-sensitive adhesive composition of the present invention preferably has a halogen ion concentration of 50 ppm or less. Such a configuration is preferable from the viewpoint that a corrosion prevention effect on metal wiring can be obtained in touch panels in which optical members having metal wiring (touch sensor films), such as metal mesh films and silver nanowire films, are laminated.

A second aspect of the present invention provides a pressure-sensitive adhesive layer formed of the acrylic

pressure-sensitive adhesive composition of the present invention. Herein, the pressure-sensitive adhesive layer of the second aspect of the present invention may be referred to as "the pressure-sensitive adhesive layer of the present invention". Since the pressure-sensitive adhesive layer of the present invention is formed of the acrylic pressure-sensitive adhesive composition of the present invention, it is preferable from the viewpoint that even if returned to normal temperature after being placed under high temperature and high humidity conditions, cloudiness due to humidification is unlikely to occur, and the visibility of the image display device can be maintained.

The pressure-sensitive adhesive layer of the present invention preferably has a dielectric constant at a frequency of 100 kHz of 4 or less. Such a configuration is preferable from the viewpoint that the insulation resistance of the pressure-sensitive adhesive layer is improved and a malfunction of a touch operation due to electrical noise can be suppressed in touch panels in which optical members having metal wiring (touch sensor films), such as metal mesh films and silver nanowire films, are laminated.

A third aspect of the present invention provides a pressure-sensitive adhesive sheet having the pressure-sensitive adhesive layer of the present invention. Herein, the pressure-sensitive adhesive sheet of the third aspect of the present invention may be referred to as "the pressure-sensitive adhesive sheet of the present invention". Since the pressure-sensitive adhesive sheet of the present invention has the pressure-sensitive adhesive layer of the present invention, it is preferable from the viewpoint that even if returned to normal temperature after being placed under high temperature and high humidity conditions, cloudiness due to humidification is unlikely to occur, and the visibility of the image display device can be maintained.

A fourth aspect of the present invention provides an optical member with pressure-sensitive adhesive layer, wherein the pressure-sensitive adhesive sheet of the present invention is laminated on at least one face of the optical member. Herein, the optical member with pressure-sensitive adhesive layer of the fourth aspect of the present invention may be referred to as "the optical member with pressure-sensitive adhesive layer of the present invention". Since the optical member with pressure-sensitive adhesive layer of the present invention has the pressure-sensitive adhesive layer of the present invention, it is preferable from the viewpoint that even if returned to normal temperature after being placed under high temperature and high humidity conditions, cloudiness due to humidification is unlikely to occur, and the visibility of the image display device can be maintained.

A fifth aspect of the present invention provides an image display device having the optical member with pressure-sensitive adhesive layer of the present invention. Herein, the image display device of the fifth aspect of the present invention may be referred to as "the image display device of the present invention". The image display device of the present invention may be a touch panel.

The image display device and touch panel of the present invention are preferable from the viewpoint that visibility is unlikely to deteriorate even under high temperature and humidification conditions since optical members are laminated by the pressure-sensitive adhesive layer of the present invention.

## Advantageous Effects of Invention

The acrylic pressure-sensitive adhesive composition of the present invention can form a pressure-sensitive adhesive layer that is not susceptible to cloudiness due to humidification even if returned to normal temperature after high temperature and humidification conditions. Accordingly, a high-performance image display device and a touch panel whose visibility is unlikely to deteriorate even under high temperature and humidification conditions can be efficiently produced by laminating an optical member using a pressure-sensitive adhesive sheet having a pressure-sensitive adhesive layer formed of the acrylic pressure-sensitive adhesive composition of the present invention.

## Brief Description of Drawings

[Figure 1] Figure 1 is a schematic view illustrating a specific example of a preferable form of the pressure-sensitive adhesive sheet of the present invention.
[Figure 2] Figure 2 is a schematic view illustrating a specific example of a preferable form of the optical member with pressure-sensitive adhesive layer of the present invention.
[Figure 3] Figure 3 is a schematic view illustrating a specific example of a preferable form of the image display device of the present invention.
[Figure 4] Figure 4 is a schematic view illustrating a specific example of a preferable form of the touch panel of the present invention.

## Description of Embodiments

[1. Acrylic pressure-sensitive adhesive composition and pressure-sensitive adhesive layer]

The acrylic pressure-sensitive adhesive composition of the present invention is an acrylic pressure-sensitive adhesive composition for forming a pressure-sensitive adhesive layer used for laminating an optical member of an image display device, wherein

the moisture amounts $W_1$ and $W_2$ after subjecting the pressure-sensitive adhesive layer to the conditions (A) and (B) below, respectively, satisfy the following expression (1):

$$W_2/W_1 > 1 \quad ... \quad (1)$$

(A) the moisture amount when the pressure-sensitive adhesive layer is stored under conditions of 23°C and 50% RH for 24 hours: $W_1$ (μg/cm²); and

(B) the moisture amount when the pressure-sensitive adhesive layer after (A) is stored under conditions of 85°C and 85% RH for 8 hours and then stored under conditions of 23°C and 50% RH for 24 hours: $W_2$ (μg/cm²).

The acrylic pressure-sensitive adhesive composition of the present invention is used for laminating optical members such as polarizing films, retardation films, optical compensation films, touch sensor films, and cover films on an image display panel in image display devices such as liquid crystal displays (LCDs) and organic electroluminescence displays (OLEDs), as well as touch panels in which touch sensors are incorporated in these image display devices, or for forming a pressure-sensitive adhesive layer used for laminating these optical members to each other.

The "image display device" referred to herein is intended to include a "touch panel" unless otherwise noted.

For the lamination of optical members, optical members with pressure-sensitive adhesive layer, in which a pressure-sensitive adhesive sheet is laminated on the optical members, are generally used. When the optical members with pressure-sensitive adhesive layer are laminated on a glass substrate or the like and placed under high temperature and high humidity conditions, such as 85°C and 85% RH, and then returned to normal temperature, there may occur a phenomenon that the pressure-sensitive adhesive layer becomes cloudy (cloudiness due to humidification). When cloudiness due to humidification occurs, it causes a reduction in the visibility of the image display device.

The cause by which a pressure-sensitive adhesive layer gets clouded due to humidification when returned to normal temperature after high temperature and humidification conditions is thought to be that the moisture absorbed by the pressure-sensitive adhesive layer under high temperature and humidification conditions is released from the pressure-sensitive adhesive layer and aggregated when returned to normal temperature, resulting in cloudiness. Accordingly, the configuration in which the moisture amounts $W_1$ and $W_2$ after subjecting the pressure-sensitive adhesive layer to the above conditions (A) and (B), respectively, satisfy the above expression (1), that is, the moisture amount $W_2$ is larger than the moisture amount $W_1$, is thought to suppress the amount of moisture released from the pressure-sensitive adhesive layer and aggregated when returned to normal temperature from high temperature and humidification conditions, thereby preventing the occurrence of cloudiness due to humidification and maintaining the visibility of the image display device.

From the viewpoint of suppressing the amount of moisture released from the pressure-sensitive adhesive layer and aggregated when returned to normal temperature from high temperature and humidification conditions, thereby further suppressing cloudiness due to humidification, the $W_2/W_1$ is preferably 1.05 or more, more preferably 1.1 or more, and further preferably 1.15 or more. The upper limit of the $W_2/W_1$ is not particularly limited, and may be 2 or less.

In the acrylic pressure-sensitive adhesive composition of the present invention, the moisture amounts $W_1$ and $W_3$ after subjecting the pressure-sensitive adhesive layer to the conditions (A) and (C) below, respectively, preferably satisfy the following expression (2):

$$W_3/W_1 > 2.3 \quad ... \quad (2)$$

(A) the moisture amount when the pressure-sensitive adhesive layer is stored under conditions of 23°C and 50% RH for 24 hours: $W_1$ (μg/cm²); and

(C) the moisture amount when the pressure-sensitive adhesive layer after (A) is stored under conditions of 85°C and 85% RH for 8 hours: $W_3$ (μg/cm²).

The configuration in which the $W_3/W_1$ satisfies the above expression (2), that is, the $W_3/W_1$ is larger than 2.3, is preferable from the viewpoint that the larger the amount of moisture absorbed by the pressure-sensitive adhesive layer under high temperature and high humidity conditions, the easier it is for the pressure-sensitive adhesive layer to retain moisture, and less moisture is released from the pressure-sensitive adhesive layer and aggregated when subsequently returned to normal temperature, that is, the $W_2/W_1$ easily satisfies the above expression (1), and even if returned to normal temperature after being placed under high temperature and high humidity conditions, cloudiness due to humidification is

unlikely to occur, and the visibility of the image display device can be maintained.

From the viewpoint that the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification, the $W_3/W_1$ is preferably 2.35 or more, more preferably 2.4 or more, further preferably 2.45 or more, and may be 2.5 or more. The upper limit of the $W_3/W_1$ is not particularly limited, and may be 5 or less.

In the acrylic pressure-sensitive adhesive composition of the present invention, the moisture amount $W_1$ ($\mu g/cm^2$) after subjecting the pressure-sensitive adhesive layer to the above condition (A) is not particularly limited, but from the viewpoint that the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification, it is preferably 117 $\mu g/cm^2$ or more, more preferably 118 $\mu g/cm^2$ or more, further preferably 119 $\mu g/cm^2$ or more, and may be 120 $\mu g/cm^2$ or more. The upper limit of the moisture amount $W_1$ ($\mu g/cm^2$) is not particularly limited, and may be 1000 $\mu g/cm^2$ or less.

In the acrylic pressure-sensitive adhesive composition of the present invention, the moisture amount $W_2$ ($\mu g/cm^2$) after subjecting the pressure-sensitive adhesive layer to the above condition (B) is not particularly limited, but from the viewpoint that the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification, it is preferably 120 $\mu g/cm^2$ or more, more preferably 130 $\mu g/cm^2$ or more, further preferably 135 $\mu g/cm^2$ or more, and may be 140 $\mu g/cm^2$ or more. The upper limit of the moisture amount $W_2$ ($\mu g/cm^2$) is not particularly limited, and may be 2000 $\mu g/cm^2$ or less.

In the acrylic pressure-sensitive adhesive composition of the present invention, the moisture amount $W_3$ ($\mu g/cm^2$) after subjecting the pressure-sensitive adhesive layer to the above condition (C) is not particularly limited, but from the viewpoint that the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification, it is preferably 280 $\mu g/cm^2$ or more, more preferably 290 $\mu g/cm^2$ or more, further preferably 300 $\mu g/cm^2$ or more, and may be 310 $\mu g/cm^2$ or more. The upper limit of the moisture amount $W_3$ ($\mu g/cm^2$) is not particularly limited, and may be 5000 $\mu g/cm^2$ or less.

In the acrylic pressure-sensitive adhesive composition of the present invention, the above moisture amounts $W_1$, $W_2$, and $W_3$, as well as their proportions $W_2/W_1$ and $W_3/W_1$, are measured specifically by the moisture amount measurement in Examples listed below, and can be adjusted depending on, for example, the monomer composition of the acrylic polymer mentioned below (type, content, composition, and other factors of functional group-containing monomer), the type of the crosslinking agent and the amount thereof to be formulated, the type of the hydrogenated polyolefinic resin and the amount thereof to be formulated, and other factors.

In the pressure-sensitive adhesive layer of the present invention, without particular limitation, the dielectric constant thereof is preferably controlled low from the viewpoint of prevention of a malfunction of a touch panel having the pressure-sensitive adhesive layer. In the pressure-sensitive adhesive layer of the present invention, the dielectric constant at a frequency of 100 kHz is preferably 4 or less, more preferably 3.9 or less, and further preferably 3.8 or less. The lower limit value of the dielectric constant at a frequency of 100 kHz is, but not particularly limited to, preferably 2.3 or more, more preferably 2.4 or more, further preferably 2.5 or more.

The dielectric constant of the pressure-sensitive adhesive layer of the present invention is measured specifically by the dielectric constant measurement in Examples listed below, and can be adjusted depending on, for example, the monomer composition of the acrylic polymer mentioned below (type, content, composition, and other factors of functional group-containing monomer), the type of the crosslinking agent and the amount thereof to be formulated, the type of the hydrogenated polyolefinic resin and the amount thereof to be formulated, and other factors.

The pressure-sensitive adhesive layer of the present invention or the pressure-sensitive adhesive sheet of the present invention mentioned below has excellent transparency since it is used for laminating an optical member of an image display device. For this reason, the visibility and appearance through the pressure-sensitive adhesive layer or pressure-sensitive adhesive sheet of the present invention are excellent.

The haze of the pressure-sensitive adhesive layer or pressure-sensitive adhesive sheet of the present invention (in accordance with JIS K 7136) is, but not particularly limited to, preferably 1.0% or less, and more preferably 0.8% or less. A haze of 1.0% or less is preferable because excellent transparency and excellent appearance can be obtained. The lower limit value of the haze is, but not particularly limited to, theoretically 0%, and may be practically more than 0.01%. The haze described above can be measured, for example, on a specimen made by allowing the pressure-sensitive adhesive layer (thickness: 100 $\mu m$) or pressure-sensitive adhesive sheet including the pressure-sensitive adhesive layer to stand under normal conditions (23°C, 50% RH) for at least 24 hours and then laminating the layer on slide glass (for example, one

having a total light transmittance of 92% and a haze of 0.2%), by use of a haze meter (manufactured by Murakami Color Research Laboratory Co., Ltd., trade name "HM-150N") or an equivalent thereof.

The total light transmittance in the visible light wavelength region (in accordance with JIS K7361-1) of the pressure-sensitive adhesive layer or pressure-sensitive adhesive sheet of the present invention is, but not particularly limited to, preferably 90% or more, more preferably 91% or more, and further preferably 92% or more. A case in which the total light transmittance is 90% or more is preferable because excellent transparency and an excellent appearance can be obtained. The upper limit value of the total light transmittance is, but not particularly limited to, theoretically a value obtained by subtracting the optical loss due to the reflection occurring at the air interface (Fresnel Loss) from 100%, and may be practically 95% or less. The total light transmittance described above can be measured, for example, on a specimen made by allowing the pressure-sensitive adhesive layer (thickness: 100 μm) or pressure-sensitive adhesive sheet including the pressure-sensitive adhesive layer to stand under normal conditions (23°C, 50% RH) for at least 24 hours, then, if the layer has a release liner, separating the release liner, and laminating the layer on slide glass (for example, one having a total light transmittance of 92% and a haze of 0.2%), by use of a haze meter (manufactured by Murakami Color Research Laboratory Co., Ltd., trade name "HM-150N") or an equivalent thereof.

The thickness of the pressure-sensitive adhesive layer of the present invention is, but not particularly limited to, preferably from 12 to 350 μm, and more preferably from 12 to 300 μm. A case in which the thickness is equal to or larger than a certain thickness is preferable in touch panels in which optical members having metal wiring (touch sensor films), such as metal mesh films and silver nanowire films, are laminated, because the stress to the metal wiring is sufficiently relaxed to enable display irregularities to be prevented. A case in which the thickness is equal to or smaller than a certain thickness is preferable because the handleability and manufacturability are particularly excellent.

The method for producing the pressure-sensitive adhesive layer of the present invention is not particularly limited. For example, the method is to produce the acrylic pressure-sensitive adhesive composition of the present invention (precursor composition), apply (coat) it on a base or release liner, and if necessary, conduct irradiation with active energy rays, heat-drying, or the like.

For application (coating) of the pressure-sensitive adhesive composition described above, a known coating method may be used. For example, a coater, such as a gravure roll coater, a reverse roll coater, a kiss roll coater, a dip roll coater, a bar coater, a knife coater, a spray coater, a comma coater, or a direct coater may be used.

The acrylic pressure-sensitive adhesive composition of the present invention may have any form, and examples thereof include an emulsion type, a thermofusible type (hot-melt type), a solventless type (active energy ray-curable type, e.g., a monomer mixture, or a monomer mixture and a partially polymerized product thereof). Particularly, the acrylic pressure-sensitive adhesive composition of the present invention is preferably not a solvent type. This is because defects in the appearance, such as orange peel, are likely to occur when a pressure-sensitive adhesive layer is attempted to be obtained by use of a solvent-type pressure-sensitive adhesive composition. "Orange peel" refers to a phenomenon in which unevenness like the skin of yuzu, a type of citrus fruit, occurs. The acrylic pressure-sensitive adhesive composition of the present invention is preferably an active energy ray-curable type in respect of obtaining a pressure-sensitive adhesive layer excellent in appearance. Herein, the pressure-sensitive adhesive composition means a composition to be used for forming the pressure-sensitive adhesive and is intended to include the meaning of a composition to be used for forming the pressure-sensitive adhesive.

The acrylic pressure-sensitive adhesive composition of the present invention is preferably not a solvent type, as described above, that is, is free of or substantially free of an organic solvent.

The organic solvent described above is not particularly limited as long as being an organic compound used as a solvent, and examples thereof include hydrocarbon solvents such as cyclohexane, hexane, and heptane; aromatic solvents such as toluene and xylene; ester solvents such as ethyl acetate and methyl acetate; ketone solvents such as acetone and methyl ethyl ketone; and alcohol solvents such as methanol, ethanol, butanol, and isopropyl alcohol. The organic solvent may be a mixed solvent including two or more organic solvents.

In the acrylic pressure-sensitive adhesive composition of the present invention, the phrase "substantially free of" an organic solvent refers to actively formulating no organic solvent except when an organic solvent is inevitably mixed. Specifically, it can be said that one in which the content of the organic solvent in the pressure-sensitive adhesive composition is 1.0% by weight or less (preferably 0.5% by weight or less, further preferably 0.2% by weight or less) based on the total amount of the pressure-sensitive adhesive composition (total weight, 100% by weight) is substantially free thereof.

The acrylic pressure-sensitive adhesive composition of the present invention preferably has a halogen ion concentration of 50 ppm or less. This configuration is preferable from the viewpoint that a corrosion prevention effect on metal wiring can be obtained in touch panels in which optical members having metal wiring (touch sensor films), such as metal mesh films and silver nanowire films, are laminated. It can be said that one in which the content of halogen ions is preferably 50 ppm or less (for example, from 0 to 50 ppm), more preferably 40 ppm or less (for example, from 0 to 40 ppm), and further preferably 30 ppm or less (for example, from 0 to 30 ppm) based on the total amount of the pressure-sensitive adhesive composition described above is substantially free of halogen ions.

The acrylic pressure-sensitive adhesive composition of the present invention is preferably free of or substantially free of a carboxyl group-containing monomer as a monomer component constituting the acrylic polymer. Therefore, a corrosion prevention effect on metal wiring can be obtained in touch panels in which optical members having metal wiring (touch sensor films), such as metal mesh films and silver nanowire films, are laminated. It can be said that one in which the content of a carboxyl group-containing monomer is preferably 1 ng/$cm^2$ or less (for example, from 0 to 1 ng/$cm^2$), more preferably 0.8 ng/$cm^2$ or less (for example, from 0 to 0.8 ng/$cm^2$), and further preferably 0.5 ng/$cm^2$ or less (for example, from 0 to 0.5 ng/$cm^2$) based on the total amount of the pressure-sensitive adhesive composition described above is substantially free of a carboxyl group-containing monomer. Examples of the carboxyl group-containing monomer described above include (meth)acrylic acid, itaconic acid, maleic acid, fumaric acid, crotonic acid, and isocrotonic acid. In the carboxyl group-containing monomers described above, acid anhydride group-containing monomers such as maleic anhydride and itaconic anhydride are also included.

The halogen ion content and carboxyl group-containing monomer content of the acrylic pressure-sensitive adhesive composition of the present invention can be measured specifically by the methods for measuring the halogen ion content and acrylic acid ion content in Examples listed below, or the like, and can be adjusted depending on, for example, the monomer composition of the acrylic polymer mentioned below (type, content, composition, and other factors of functional group-containing monomer), the type of the crosslinking agent and the amount thereof to be formulated, the type of the hydrogenated polyolefinic resin and the amount thereof to be formulated, and other factors.

[1-1. Acrylic polymer]

The acrylic pressure-sensitive adhesive composition of the present invention is a pressure-sensitive adhesive composition containing an acrylic polymer as the base polymer. Such acrylic polymers may be used singly or in combination of two or more.

The acrylic pressure-sensitive adhesive composition of the present invention may contain a hydrogenated polyolefinic resin, a polyfunctional (meth)acrylate, a silane coupling agent, and other additives as mentioned below, in addition to the acrylic polymer.

The content of the acrylic polymer is, but not particularly limited to, preferably 60% by weight or more (e.g., from 60 to 99.9% by weight), more preferably 70% by weight or more (e.g., from 70 to 99.9% by weight) based on the total amount of the acrylic pressure-sensitive adhesive composition of the present invention (total weight, 100% by weight).

Examples of the acrylic pressure-sensitive adhesive composition of the present invention that forms the pressure-sensitive adhesive layer containing the acrylic polymer as the main component include, but not particularly limited to, compositions containing the acrylic polymer as an essential component; compositions containing a mixture of monomer components constituting the acrylic polymer (may be referred to as a "monomer mixture") or a partially polymerized product thereof as an essential component. Without particular limitation, examples of the former include so-called water-dispersible compositions (emulsion compositions), and examples of the latter include so-called active energy ray-curable compositions. Of these, the acrylic pressure-sensitive adhesive composition of the present invention is preferably a composition containing a monomer mixture or a partially polymerized product thereof as an essential component.

Herein, the "mixture of monomer components" described above is intended to include a case in the mixture is constituted by a single monomer component and a case in which the mixture is constituted by two or more monomer components. The "partially polymerized product of the mixture of monomer components" described above means a composition in which one or two or more monomer components of the constituent monomer components of the "mixture of monomer components" described above are partially polymerized.

The "acrylic polymer" referred to herein is intended to include an "acrylic polymer", a "mixture of monomer components constituting the acrylic polymer", and a "partially polymerized product of the mixture of monomer components constituting the acrylic polymer", unless otherwise indicated.

The acrylic polymer is a polymer containing an acrylic monomer as an essential monomer unit (monomer constituent unit). In other words, the acrylic polymer is a polymer containing a constituent unit derived from an acrylic monomer as a constituent unit. That is, the acrylic polymer is a polymer composed (formed) of an acrylic monomer as an essential monomer component. Herein, "(meth)acryl" represents either one or both of "acryl" and" methacryl", and the same applies to the following. The weight average molecular weight of the acrylic polymer is, but not particularly limited to, preferably from 100000 to 5000000.

As a preferable first embodiment of the acrylic pressure-sensitive adhesive composition of the present invention, the acrylic polymer is preferably a polymer containing, as monomer units, a (meth)acrylic alkyl ester having a linear or branched alkyl group (hereinafter, may be simply referred to as a "(meth)acrylic alkyl ester"), and an alicyclic structure-containing monomer.

In the first embodiment, examples of the (meth)acrylic alkyl ester described above include (meth)acrylic alkyl esters in which the alkyl group has 1 to 24 carbon atoms, such as methyl (meth)acrylate, ethyl (meth)acrylate, propyl

(meth)acrylate, isopropyl (meth)acrylate, butyl (meth)acrylate (n-butyl (meth)acrylate), isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth) acrylate, octadecyl (meth)acrylate, isostearyl (meth)acrylate, nonadecyl (meth)acrylate, and eicosyl (meth)acrylate. The (meth)acrylic alkyl esters may be used singly or in combination of two or more.

In the first embodiment, as the (meth)acrylic alkyl ester, an acrylic alkyl ester is more preferable than a methacrylic alkyl ester, in respect that the polymerization time of the acrylic polymer is reduced to enable the productivity to be improved. Particularly when the acrylic polymer of the present invention is cured by radiation polymerization, an acrylic alkyl ester is suitable.

Of these, the (meth)acrylic alkyl ester described above is preferably a (meth)acrylic alkyl ester in which the alkyl group has 1 to 18 carbon atoms, more preferably methyl methacrylate (MMA), butyl acrylate (BA), 2-ethylhexyl acrylate (2EHA), or isostearyl acrylate (ISTA), and more preferably butyl acrylate (BA) in respect of obtaining strong adhesiveness and in respect of adjusting residual stress.

The content (proportion) of the (meth)acrylic alkyl ester described above in the total monomer units of the acrylic polymer (the total amount of the monomer components constituting the acrylic polymer) in the first embodiment is, but not particularly limited to, preferably from 30 to 90 parts by weight, more preferably from 35 to 85 parts by weight, and further preferably from 40 to 80 parts by weight based on the total amount of the monomer components constituting the acrylic polymer (100 parts by weight), in respect of improving durability and obtaining high adhesion reliability.

The "total amount of the monomer components constituting the acrylic polymer" referred to herein is intended to also include a monomer component added to the acrylic pressure-sensitive adhesive composition containing the acrylic polymer for the purpose of adjusting the elastic modulus of the pressure-sensitive adhesive layer and the like in the acrylic pressure-sensitive adhesive composition of the present invention.

An alicyclic structure-containing monomer in the first embodiment means a monomer that has a polymerizable functional group having an unsaturated double bond such as a (meth)acryloyl group, a vinyl group, or the like and has an alicyclic structure. For example, (meth)acrylic alkyl esters having a cycloalkyl group are included in the alicyclic structure-containing monomers described above. However, a monomer having at least one alicyclic structure in the molecule and having at least one carboxyl group in the molecule is a carboxyl group-containing monomer and is intended not to be an alicyclic structure-containing monomer. The alicyclic structure-containing monomers may be used singly or in combination of two or more.

The alicyclic structure in the alicyclic structure-containing monomer described above is preferably a cyclic hydrocarbon structure, and has preferably 5 or more carbon atoms, more preferably 6 to 24 carbon atoms, further preferably 6 to 15 carbon atoms, particularly preferably 6 to 10 carbon atoms.

Examples of the alicyclic structure-containing monomer described above include (meth)acrylic monomers such as cyclopropyl (meth)acrylate, cyclobutyl (meth)acrylate, cyclopentyl (meth)acrylate, cyclohexyl (meth)acrylate, 3,3,5-trimethylcyclohexyl (meth)acrylate, cycloheptyl (meth)acrylate, cyclooctyl (meth)acrylate, isobornyl (meth)acrylate, dicyclopentanyl (meth)acrylate, HPMPA represented by the following formula (1), TMA-2 represented by the following formula (2), and HCPA represented by the following formula (3). In the following formula (3), the point of attachment at which the cyclohexyl ring and the structural formula in the parentheses are joined with a line is not particularly limited. Of these, isobornyl (meth)acrylate, cyclohexyl (meth)acrylate, and 3,3,5-trimethylcyclohexyl (meth)acrylate are preferable.

[Formula 1]

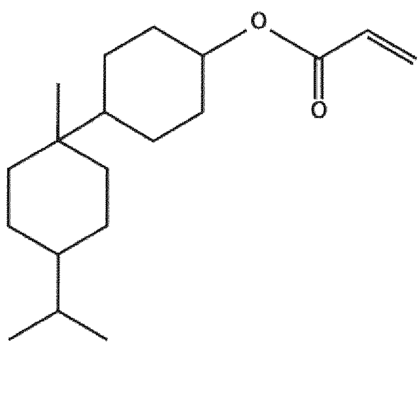

(1)

[Formula 2]

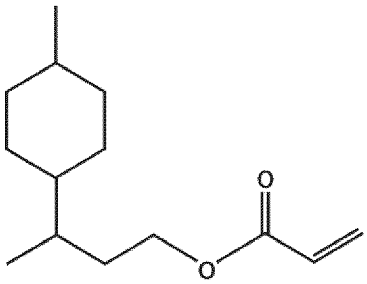

(2)

[Formula 3]

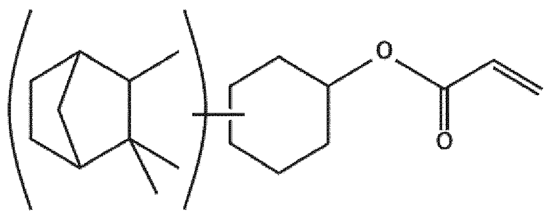

(3)

Of these, the alicyclic structure-containing monomer described above is preferably cyclohexyl acrylate (CHA) in respect of obtaining durability and strong adhesiveness.

The content (proportion) of the alicyclic structure-containing monomer described above in the total monomer units of the acrylic polymer (the total amount of the monomer components constituting the acrylic polymer) in the first embodiment is, but not particularly limited to, preferably from 3 to 50 parts by weight, more preferably from 5 to 40 parts by weight, and further preferably from 10 to 30 parts by weight based on the total amount of the monomer components constituting the acrylic polymer (100 parts by weight), in respect of improving durability and adhesiveness reliability.

The total content (proportion) of the (meth)acrylic alkyl ester and alicyclic structure-containing monomer described above in the total monomer units of the acrylic polymer (the total amount of the monomer components constituting the acrylic polymer) in the first embodiment is, but not particularly limited to, preferably from 40 to 95 parts by weight, more preferably from 50 to 90 parts by weight, and further preferably from 60 to 85 parts by weight based on the total amount of the monomer components constituting the acrylic polymer (100 parts by weight), in respect of improving durability and adhesiveness reliability.

The weight proportion of the (meth)acrylic alkyl ester and alicyclic structure-containing monomer described above ((meth)acrylic alkyl ester/alicyclic structure-containing monomer) in the acrylic polymer in the first embodiment is, but not particularly limited to, preferably from 5/95 to 95/5, more preferably from 10/90 to 90/10, and further preferably from 15/85 to 85/15, in respect of improving durability and adhesiveness reliability.

As a preferable second embodiment of the acrylic pressure-sensitive adhesive composition of the present invention, the acrylic polymer is preferably a polymer containing, as an essential monomer unit, a (meth)acrylic alkyl ester having an alkyl group having 8 or more carbon atoms (may be referred to as a "(meth)acrylic alkyl ester (A)"). That is, the acrylic polymer of the second embodiment is preferably obtained by polymerizing a monomer component containing a (meth)acrylic alkyl ester having a medium chain to long chain alkyl group, such as a (meth) acrylic alkyl ester (A). The acrylic polymer is preferable in respect that, due to the action of the medium chain to long chain alkyl group, a highly-flexible pressure-sensitive adhesive layer can be achieved and, even when optical members having metal wiring (touch sensor films), such as metal mesh films and silver nanowire films, are laminated, the stress to the metal wiring is sufficiently relaxed to enable display irregularities to be prevented.

In the second embodiment, examples of the (meth)acrylic alkyl ester (A) include (meth)acrylic alkyl esters of which the alkyl group has 8 or more carbon atoms (preferably 8 to 24 carbon atoms) such as octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth) acrylate, pentadecyl (meth)acrylate, hexadecyl (meth)acrylate, heptadecyl (meth)acrylate, octadecyl (meth)acrylate, isostearyl (meth)acrylate, nonadecyl (meth)acrylate, and eicosyl (meth)acrylate. The (meth)acrylic alkyl esters (A) may be used singly or in combination of two or more.

In the second embodiment, as the (meth)acrylic alkyl ester (A), an acrylic alkyl ester is more preferable than a methacrylic alkyl ester, in respect that the polymerization time of the acrylic polymer (A) is reduced to enable the productivity to be improved. Particularly when the acrylic polymer of the present invention is cured by radiation polymerization, an acrylic alkyl ester is suitable.

Of these, in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented, as the (meth)acrylic alkyl ester (A), a (meth)acrylic alkyl ester having a branched-chain alkyl group having 8 or more carbon atoms is preferably contained, a (meth)acrylic alkyl ester having a branched-chain alkyl group having 8 or 9 carbon atoms is preferably contained, 2-ethylhexyl (meth)acrylate is further preferably contained, and 2-ethylhexyl acrylate (2EHA) is particularly preferably contained. The number of carbon atoms in the side chain alkyl group of the branched-chain alkyl group described above is not particularly limited, and alkyl groups having 1 to 3 carbon atoms (e.g., a methyl group, an ethyl group, a n-propyl group, and an isopropyl group) are preferable. The "side chain alkyl group" is an alkyl group to be substituted at the side group of the carbon chain having the largest number of carbon atoms.

In the second embodiment, the content (proportion) of the (meth)acrylic alkyl ester described above in the total monomer units of the acrylic polymer (the total amount of the monomer components constituting the acrylic polymer) is, but not particularly limited to, preferably from 30 to 99 parts by weight, more preferably from 35 to 95 parts by weight, further preferably from 40 to 90 parts by weight based on the total amount of the monomer components constituting the acrylic polymer (100 parts by weight), in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented.

In the second embodiment, when the (meth)acrylic alkyl ester (A) contains a (meth)acrylic alkyl ester having a branched-chain alkyl group having 8 or 9 carbon atoms (hereinafter, may be referred to as a (meth)acrylic alkyl ester (A1) herein), a (meth)acrylic alkyl ester having a branched-chain alkyl group having 10 to 24 carbon atoms (hereinafter, may be referred to as a (meth)acrylic alkyl ester (A2) herein) is preferably further contained.

In the second embodiment, a case in which the (meth)acrylic alkyl ester (A) contains the (meth)acrylic alkyl ester (A2) in addition to the (meth)acrylic alkyl ester (A1) is preferable in that the dielectric constant of the pressure-sensitive adhesive layer of the present invention can be reduced due to the action of the long-chain branched-chain alkyl group and, even in the case of lamination on an optical member (touch sensor film) including a layer of metal wiring such as metal mesh wiring or silver nanowire formed, a malfunction can be prevented because of the low dielectric constant of the pressure-sensitive adhesive layer.

The Tg of the homopolymer of the (meth)acrylic alkyl ester (A2) is preferably from -80 to 0°C, further preferably from -70 to -10°C. A Tg of homopolymer of - 80°C or less is not preferable because the modulus of elasticity of the pressure-sensitive adhesive layer at normal temperature may decrease excessively, and a case of a Tg exceeding 0°C is not preferable because the adhesive strength may decrease. The Tg of the homopolymer is a value measured with a differential scanning calorimeter (DSC). Although the branched-chain alkyl group having 10 to 24 carbon atoms has 10 to 24 carbon atoms in the view of satisfying a moderate low dielectric constant and elastic modulus, an alkyl (meth)acrylate having a preferable alkyl group can be selected as appropriate in accordance with a method for producing a (meth)acrylic polymer. For example, when a (meth)acrylic polymer is produced by solution polymerization or the like, the alkyl group has further preferably 10 to 18 carbon atoms, further preferably 10 to 16 carbon atoms, further preferably 10 to 14 carbon atoms. When the acrylic polymer is produced by radiation polymerization or the like, the alkyl group has further preferably 12 to 18 carbon atoms, further preferably 14 to 18 carbon atoms.

Examples of the (meth)acrylic alkyl ester (A2) can include isodecyl acrylate (number of carbon atoms: 10, Tg of homopolymer = -60°C, hereinafter, simply abbreviated as Tg), isodecyl methacrylate (number of carbon atoms: 10, Tg = -41°C), isomyristyl acrylate (number of carbon atoms: 14, Tg = -56°C), isostearyl acrylate (number of carbon atoms: 18, Tg = -18°C), 2-propylheptyl acrylate, isoundecyl acrylate, isododecyl acrylate, isotridecyl acrylate, isopentadecyl acrylate, isohexadecyl acrylate, isoheptadecyl acrylate, and the methacrylate monomers exemplified. The (meth)acrylic alkyl esters (A2) may be used singly or in combination of two or more.

Among the branched-chain alkyl groups having 10 to 24 carbon atoms, ones having a branched-chain alkyl group such as a t-butyl group at the end of the ester group are particularly preferable in that it is considered that the molar volume increases, the dipole moment decreases, and a pressure-sensitive adhesive layer having a balance between the both can be obtained. As the branched-chain alkyl group provided at the end of the ester group, branched-chain alkyl groups having 4 to 6 carbon atoms such as a neopentyl group and a t-pentyl group are preferable, and a t-butyl group is particularly preferable. A preferable example of the (meth)acrylic alkyl ester (A2) having a t-butyl group at the end of the ester group includes isostearyl acrylate represented by the following formula.

[Formula 4]

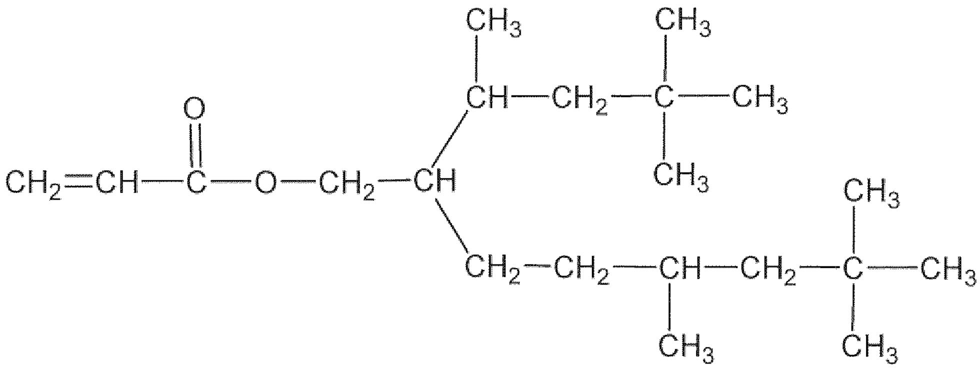

In the second embodiment, the content (proportion) of the (meth)acrylic alkyl ester (A1) described above in the total monomer units of the acrylic polymer (the total amount of the monomer components constituting the acrylic polymer) is, but not particularly limited to, preferably 30 parts by weight or more, more preferably 35 parts by weight or more, further preferably 40 parts by weight or more, and may be 45 parts by weight or more based on the total amount of the monomer components constituting the acrylic polymer (100 parts by weight), in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented. The content described above is preferably 70 parts by weight or less, more preferably 65 parts by weight or less, further preferably 60 parts by weight or less, from the viewpoint of allowing the pressure-sensitive adhesive layer to have a low dielectric constant to thereby prevent a malfunction.

In the second embodiment, the content (proportion) of the (meth)acrylic alkyl ester (A2) described above in the total monomer units of the acrylic polymer (100 parts by weight of the total amount of the monomer components constituting the acrylic polymer) is, but not particularly limited to, preferably 10 parts by weight or more, more preferably 15 parts by weight or more, further preferably 20 parts by weight or more, from the viewpoint of allowing the pressure-sensitive adhesive layer to have a low dielectric constant to thereby prevent a malfunction. The content described above is preferably 50 parts by weight or less, more preferably 40 parts by weight or less, further preferably 35 parts by weight or less, particularly preferably 30 parts by weight or less, in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented.

The weight proportion of the (meth)acrylic alkyl ester (A1) and (meth)acrylic alkyl ester (A2) described above ((meth)acrylic alkyl ester (A2)/(meth)acrylic alkyl ester (A1)) in the acrylic polymer of the second embodiment is, but not particularly limited to, preferably 1.1 or less, more preferably 0.6 or less, further preferably 0.55 or less, particularly preferably 0.5 or less, and may be 0.45 or less, in respect that a highly-flexible pressure-sensitive adhesive layer can be achieved and, even when optical members having metal wiring (touch sensor films), such as metal mesh films and silver nanowire films, are laminated, the stress to the metal wiring is sufficiently relaxed to enable display irregularities to be prevented. The ratio described above is preferably 0.2 or more, more preferably 0.25 or more, further preferably 0.3 or more, and may be 0.35 or more, from the viewpoint of allowing the pressure-sensitive adhesive layer to have a low dielectric constant to thereby prevent a malfunction.

In the second embodiment, the acrylic polymer may contain a (meth)acrylic alkyl ester other than the (meth) acrylic alkyl ester (A) (hereinafter, may be referred to as the "(meth)acrylic alkyl ester (B)") as a monomer component. Examples of the (meth)acrylic alkyl ester (B) described above include (meth)acrylic alkyl esters having a linear- or branched-chain alkyl group having 1 to 7 carbon atoms, and examples thereof include methyl (meth)acrylate, ethyl (meth) acrylate, propyl (meth)acrylate, isopropyl (meth)acrylate, butyl (meth)acrylate (n-butyl (meth)acrylate), isobutyl (meth) acrylate, s-butyl (meth)acrylate, t-butyl (meth)acrylate, pentyl (meth)acrylate, isopentyl (meth)acrylate, hexyl (meth) acrylate, and heptyl (meth)acrylate. The (meth)acrylic alkyl esters (B) may be used singly or in combination of two or more.

In the second embodiment, the content (proportion) of the (meth)acrylic alkyl ester (B) described above in the total monomer units of the acrylic polymer (the total amount of the monomer components constituting the acrylic polymer) is, but not particularly limited to, preferably 10 parts by weight or less, more preferably 5 parts by weight or less based on the total amount of the monomer components constituting the acrylic polymer (100 parts by weight), in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented.

In the acrylic pressure-sensitive adhesive composition of the present invention (acrylic pressure-sensitive adhesive compositions of the first and second embodiments), the acrylic polymer may also contain a functional

group-containing monomer that can be copolymerized (copolymerizable functional group-containing monomer) as a monomer unit, in addition to the (meth)acrylic alkyl ester (including the (meth)acrylic alkyl ester (A) and the (meth)acrylic alkyl ester (B)) and the alicyclic structure-containing monomer described above. That is, the acrylic polymer may contain a functional group-containing monomer as a constituent monomer component. Functional group-containing monomers may be used singly or in combination of two or more.

The content (proportion) of the functional group-containing monomer described above based on the total amount of the monomer components constituting the acrylic polymer (100 parts by weight) is, but not particularly limited to, preferably from 10 to 40 parts by weight, more preferably from 15 to 37 parts by weight, and further preferably from 20 to 35 parts by weight, from the viewpoint of suppressing the amount of moisture released from the pressure-sensitive adhesive layer and aggregated when returned to normal temperature from high temperature and humidification conditions, thereby preventing the occurrence of cloudiness due to humidification and maintaining the visibility of the image display device.

The acrylic polymer preferably contains only one of functional group-containing monomer as a monomer unit, from the viewpoint of suppressing the amount of moisture released from the pressure-sensitive adhesive layer and aggregated when returned to normal temperature from high temperature and humidification conditions, thereby preventing the occurrence of cloudiness due to humidification and maintaining the visibility of the image display device. When the acrylic polymer contains only one of functional group-containing monomer as a monomer unit, the content (proportion) of the functional group-containing monomer based on the total amount of the monomer components constituting the acrylic polymer (100 parts by weight) is preferably from 20 to 40 parts by weight, more preferably from 25 to 37 parts by weight, and further preferably from 30 to 35 parts by weight, from the viewpoint of suppressing the amount of moisture released from the pressure-sensitive adhesive layer and aggregated when returned to normal temperature from high temperature and humidification conditions, thereby preventing the occurrence of cloudiness due to humidification and maintaining the visibility of the image display device.

When the acrylic polymer contains two or more of functional group-containing monomers as monomer units, the content (proportion) of the functional group-containing monomer with the highest content based on the total amount of the functional group-containing monomer components constituting the acrylic polymer (100 parts by weight) is preferably 75 parts by weight or more, more preferably 80 parts by weight or more, and further preferably 85 parts by weight or more, from the viewpoint of suppressing the amount of moisture released from the pressure-sensitive adhesive layer and aggregated when returned to normal temperature from high temperature and humidification conditions, thereby preventing the occurrence of cloudiness due to humidification and maintaining the visibility of the image display device.

Preferable examples of the functional group-containing monomer described above include hydroxyl group-containing monomers. When the acrylic polymer contains a hydroxyl group-containing monomer as a monomer unit, the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification. In addition, polymerization is facilitated on polymerizing the constituent monomer components, and favorable cohesion is more easily obtained. Therefore, strong adhesiveness is more easily obtained, and excellent foaming and peeling resistance is more easily obtained. Further, whitening of the pressure-sensitive adhesive sheet, which may occur under a high-humidity environment, is more easily suppressed.

When the acrylic polymer described above contains the hydroxyl group-containing monomer described above in the largest amount as a functional group-containing monomer component constituting the polymer, the content (proportion) of the hydroxyl group-containing monomer described above based on the total amount of the monomer components constituting the acrylic polymer (100 parts by weight) is preferably 20 parts by weight or more, more preferably 25 parts by weight or more, and further preferably 30 parts by weight or more, from the viewpoint that the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification. The upper limit of the content of the hydroxyl group-containing monomer described above is, but not particularly limited to, preferably 40 parts by weight or less, more preferably 37 parts by weight or less, and further preferably 35 parts by weight or less.

Further, preferable examples of the functional group-containing monomer described above include nitrogen atom-containing monomers. When the acrylic polymer contains a nitrogen atom-containing monomer as a monomer unit, the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification. In addition, since moderate cohesion is more easily obtained, the 180° (degree) peel adhesive strength to a glass plate and the 180° peel adhesive strength to an acryl plate are increased, strong adhesiveness is more easily obtained, and excellent foaming and peeling resistance is more easily obtained. Further, the moderate flexibility is more easily obtained via the pressure-sensitive adhesive layer, and even when the 300% tensile residual stress is adjusted within a specific range and an optical member (touch sensor film) having metal wiring such as a metal mesh film or silver nanowire film is laminated,

the stress to the metal wiring is sufficiently relaxed to enable display irregularities to be prevented.

When the acrylic polymer described above contains the nitrogen atom-containing monomer described above in the largest amount as a functional group-containing monomer component constituting the polymer, the proportion of the nitrogen atom-containing monomer in the total monomer components constituting the acrylic polymer (100 parts by weight) is, but not particularly limited to, preferably 16 parts by weight or more, more preferably 18 parts by weight or more, and further preferably 20 parts by weight or more. The proportion described above being 16 parts by weight or more is preferable from the viewpoint that the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification. The proportion described above of 16 part by weight or more is preferable from the viewpoint that favorable cohesion is more easily obtained and adhesion reliability at high temperatures is more easily obtained. Further, the proportion of this value is preferable because suppression of clouding under a high-humidity environment and durability are more improved, and higher adhesion reliability to metal mesh wiring or a silver nanowire layer can be obtained. The upper limit of the proportion of the nitrogen atom-containing monomer is preferably 40 parts by weight or less, more preferably 35 parts by weight or less, further preferably 30 parts by weight or less, in respect that a pressure-sensitive adhesive layer having moderate flexibility is obtained to prevent display irregularities and that a pressure-sensitive adhesive layer excellent in transparency is obtained.

When the acrylic polymer described above contains the hydroxyl group-containing monomer and the nitrogen atom-containing monomer as functional group-containing monomer components constituting the polymer, a higher content proportion of the functional group-containing monomer contained in a larger amount among the hydroxyl group-containing monomer and the nitrogen atom-containing monomer is preferable from the viewpoint that the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification.

When the acrylic polymer described above contains the hydroxyl group-containing monomer and the nitrogen atom-containing monomer as functional group-containing monomer components constituting the polymer, the content proportion of the functional group-containing monomer contained in a larger amount among the hydroxyl group-containing monomer and the nitrogen atom-containing monomer is preferably 75 parts by weight or more, more preferably 80 parts by weight or more, and further preferably 85 parts by weight or more based on the total amount of the hydroxyl group-containing monomer and the nitrogen atom-containing monomer (100 parts by weight), from the viewpoint that the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification.

The acrylic polymer described above can be obtained by polymerizing the monomer unit (monomer component) described above by a known or customary polymerization method. Examples of the method for polymerizing the acrylic polymer include a solution polymerization method, an emulsion polymerization method, a bulk polymerization method, and a polymerization method by an active energy-ray irradiation (active energy-ray polymerization method). Of these, in respect of transparency, water resistance, costs, and the like of the pressure-sensitive adhesive layer, the solution polymerization method and active energy-ray polymerization method are preferable, and the active energy-ray polymerization method is more preferable.

Examples of the active energy rays to be applied in the active energy-ray polymerization (photopolymerization) include ionizing radiation such as an $\alpha$-ray, a $\beta$-ray, a $\gamma$-ray, a neutron ray, and an electron ray, and ultraviolet, and ultraviolet is particularly preferable. The irradiation energy, irradiation time, irradiation method, and the like of the active energy ray are not particularly limited, and it is only required that the reaction of the monomer components can be generated by activating a photopolymerization initiator.

In polymerization of the acrylic polymer, various common solvents may be used. Examples of such solvents include organic solvents such as: esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. The solvents may be used singly or in combination of two or more.

In polymerization of the acrylic polymer, a polymerization initiator such as a thermal polymerization initiator or a photopolymerization initiator (photoinitiator) may be used depending on the type of polymerization reaction. The polymerization initiators may be used singly or in combination of two or more.

Examples of the photopolymerization initiator described above include, but not particularly limited to, benzoin ether photopolymerization initiators, acetophenone photopolymerization initiators, $\alpha$-ketol photopolymerization initiators, aromatic sulfonyl chloride photopolymerization initiators, photoactive oxime photopolymerization initiators, benzoin photopolymerization initiators, benzyl photopolymerization initiators, benzophenone photopolymerization initiators, ketal photopolymerization initiators, and thioxantone photopolymerization initiators. The photopolymerization initiators may be

used singly or in combination of two or more.

Examples of the benzoin ether photopolymerization initiators described above include benzoin methyl ether, benzoin ethyl ether, benzoin propyl ether, benzoin isopropyl ether, benzoin isobutyl ether, 2,2-dimethoxy-1,2-diphenylethane-1-on, and anisoin methyl ether. Examples of the acetophenone photopolymerization initiators described above include 2,2-diethoxyacetophenone, 2,2-dimethoxy-2-phenylacetophenone, 1-hydroxycyclohexylphenylketone, 4-phenoxydicycloacetophenone, and 4-(t-butyl)dichloroacetophenone. Examples of the α-ketol photopolymerization initiators described above include 2-methyl-2-hydroxypropiophenone and 1-[4-(2-hydroxyethyl)phenyl]-2-methylpropan-1-one. Examples of the aromatic sulfonyl chloride photopolymerization initiators include 2-naphthalenesulfonyl chloride. Examples of the photoactive oxime photopolymerization initiators described above include 1-phenyl-1,2-propanedion-2-(o-ethoxycarbonyl)-oxime. Examples of the benzoin photopolymerization initiators described above include benzoin. Examples of the benzyl photopolymerization initiators described above include benzyl. Examples of the benzophenone photopolymerization initiators described above include benzophenone, benzoyl benzoate, 3,3'-dimethyl-4-methoxybenzophenone, polyvinyl benzophenone, and α-hydroxycyclohexyl phenyl ketone. Examples of the ketal photopolymerization initiators described above include benzyl dimethyl ketal. Examples of the thioxantone photopolymerization initiators described above include thioxantone, 2-chlorothioxantone, 2-methylthioxantone, 2,4-dimethylthioxantone, isopropylthioxantone, 2,4-diisopropylthioxantone, and dodecylthioxantone.

The amount of the photopolymerization initiator described above to be used is, but not particularly limited to, for example, preferably from 0.001 to 1 part by weight, more preferably from 0.01 to 0.50 parts by weight based on 100 parts by weight of the total monomer units of the acrylic polymer (the total amount of the monomer components constituting the acrylic polymer).

Examples of the thermal polymerization initiator include, but not particularly limited to, azo polymerization initiators, peroxide polymerization initiators (e.g., dibenzoyl peroxide and tert-butyl permaleate), and redox polymerization initiators. Of these, preferable are the azo polymerization initiators disclosed in Japanese Patent Laid-Open No. 2002-69411. Examples of the azo polymerization initiators described above include 2,2'-azobisisobutyronitrile (hereinafter, may be referred to as "AIBN"), 2,2'-azobis-2-methylbutyronitrile (hereinafter, may be referred to as "AMBN"), dimethyl 2,2'-azobis(2-2-methylpropionate), and 4,4'-azobis-4-cyanovaleric acid.

The amount of the thermal polymerization initiator described above to be used is, but not particularly limited to, for example, in the case of the azo polymerization initiator described above, preferably from 0.05 to 0.5 parts by weight, more preferably from 0.1 to 0.3 parts by weight based on 100 parts by weight of the total monomer units of the acrylic polymer (the total amount of the monomer components constituting the acrylic polymer).

[1-2. Hydroxyl group-containing monomer]

A hydroxyl group-containing monomer means a monomer having at least one hydroxyl group in the molecule. A monomer having at least one hydroxyl group in the molecule and having at least one carboxyl group in the molecule is a carboxyl group-containing monomer and is intended not to be a hydroxyl group-containing monomer. Specific examples of the hydroxyl group-containing monomer described above include, but not particularly limited to, hydroxyl group-containing (meth)acrylic esters such as 2-hydroxyethyl (meth)acrylate, 2-hydroxypropyl (meth)acrylate, 2-hydroxybutyl (meth)acrylate, 3-hydroxypropyl (meth)acrylate, 4-hydroxybutyl (meth)acrylate, 6-hydroxyhexyl (meth)acrylate, hydroxyoctyl (meth)acrylate, hydroxydecyl (meth)acrylate, hydroxylauryl (meth)acrylate, and (4-hydroxymethylcyclohexyl) (meth)acrylate methyl; vinyl alcohol, and allyl alcohol. Of these, as the hydroxyl group-containing monomer described above, hydroxyl group-containing (meth)acrylic esters are preferable, and 2-hydroxyethyl acrylate (HEA), 2-hydroxypropyl acrylate (HPA), and 4-hydroxybutyl acrylate (4HBA) are more preferable, from the viewpoint that the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification, and also from the viewpoint that favorable cohesion is more easily obtained and adhesion reliability at high temperatures is more easily obtained. The hydroxyl group-containing monomers may be used singly or in combination of two or more.

[1-3. Nitrogen atom-containing monomer]

A nitrogen atom-containing monomer means a monomer having at least one nitrogen atom in the molecule (in one molecule). However, the nitrogen atom-containing monomer described above is intended not to be included in the hydroxyl group-containing monomers described above. That is, herein, a monomer having a hydroxyl group and a nitrogen atom in the molecule is intended to be included in the nitrogen atom-containing monomer. A monomer having at least one nitrogen atom in the molecule and having at least one carboxyl group in the molecule is intended to be a carboxyl group-containing monomer and not to be a nitrogen atom-containing monomer.

As the nitrogen atom-containing monomer described above, N-vinyl cyclic amides, (meth)acrylamides, and the

like are preferable from the viewpoint that the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification, and also from the viewpoint of improving foaming and peeling resistance. The nitrogen atom-containing monomers may be used singly or in combination of two or more.

As the N-vinyl cyclic amide described above, N-vinyl cyclic amides represented by the following formula (4) are preferable from the viewpoint that the amount of moisture absorbed by the pressure-sensitive adhesive layer under high temperature and high humidity conditions becomes larger, and less moisture is released from the pressure-sensitive adhesive layer and aggregated when subsequently returned to normal temperature, thereby further suppressing cloudiness due to humidification, and also from the viewpoint that favorable cohesion is more easily obtained and adhesion reliability at high temperatures is more easily obtained.

[Formula 5]

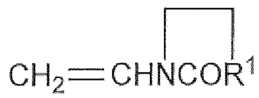 (4)

In formula (4), $R^1$ represents a divalent organic group.

$R^1$ in the above formula (4) is a divalent organic group, preferably a divalent saturated hydrocarbon group or unsaturated hydrocarbon group, and more preferably a divalent saturated hydrocarbon group (for example, an alkylene group having 3 to 5 carbon atoms).

The N-vinyl cyclic amide represented by the above formula (4) is preferably N-vinyl-2-pyrrolidone (NVP), N-vinyl-2-piperidone, N-vinyl-2-caprolactam, N-vinyl-3-morpholinone, N-vinyl-1,3-oxazin-2-one, N-vinyl-3,5-morpholine dione, or the like, more preferably N-vinyl-2-pyrrolidone or N-vinyl-2-caprolactam, further preferably N-vinyl-2-pyrrolidone, from the viewpoint of further improving foaming and peeling resistance,

Examples of the (meth)acrylamides include (meth)acrylamide, N-alkyl (meth)acrylamides, and N,N-dialkyl (meth)acrylamides. Examples of the N-alkyl(meth)acrylamides described above include N-ethyl(meth)acrylamide, N-isopropyl(meth)acrylamide, N-n-butyl (meth)acrylamide, and N-octylacrylamide. Further, (meth)acrylamides having an amino group such as dimethylaminoethyl(meth)acrylamide, diethylaminoethyl(meth)acrylamide, and dimethylaminopropyl(meth)acrylamide are also included in the N-alkyl(meth)acrylamides. Examples of the N,N-dialkyl(meth)acrylamides described above include N,N-dimethyl(meth)acrylamide, N,N-diethyl(meth)acrylamide, N,N-dipropyl(meth)acrylamide, N,N-diisopropyl(meth)acrylamide, N,N-di(n-butyl) (meth)acrylamide, and N,N-di(t-butyl) (meth)acrylamide.

In the (meth)acrylamides described above, various N-hydroxyalkyl(meth)acrylamide, for example, are also included. Examples of the N-hydroxyalkyl(meth)acrylamide described above include N-methylol(meth)acrylamide, N-(2-hydroxyethyl) (meth)acrylamide, N-(2-hydroxypropyl) (meth)acrylamide, N-(1-hydroxypropyl) (meth)acrylamide, N-(3-hydroxypropyl) (meth)acrylamide, N-(2-hydroxybutyl) (meth)acrylamide, N-(3-hydroxybutyl) (meth)acrylamide, N-(4-hydroxybutyl) (meth)acrylamide, and N-methyl-N-2-hydroxyethyl(meth)acrylamide.

In the (meth)acrylamides described above, various N-alkoxyalkyl(meth)acrylamides, for example, are also included. Examples of the N-alkoxyalkyl(meth)acrylamide described above include N-methoxymethyl(meth)acrylamide and N-butoxymethyl(meth)acrylamide.

Examples of nitrogen atom-containing monomers other than the N-vinyl cyclic amides and (meth)acrylamides described above include amino group-containing monomers such as aminoethyl(meth)acrylate, dimethylaminoethyl(meth)acrylate, dimethylaminopropyl(meth)acrylate, and t-butylaminoethyl(meth)acrylate; cyano group-containing monomers such as acrylonitrile and methacrylonitrile; heterocycle-containing monomers such as (meth)acryloylmorpholine, N-vinylpiperazine, N-vinylpyrrole, N-vinylimidazole, N-vinylpyrazine, N-vinylmorpholine, N-vinylpyrazole, vinylpyridine, vinylpyrimidine, vinyloxazole, vinylisooxazole, vinylthiazole, vinylisothiazole, vinylpyridazine, (meth)acryloylpyrrolidone, (meth)acryloylpyrrolidine, (meth)acryloylpiperidine, and N-methylvinylpyrrolidone; imide group-containing monomers, such as maleimide monomers such as N-cyclohexylmaleimide, N-isopropylmaleimide, N-laurylmaleimide, and N-phenylmaleimide; itaconimide monomers such as N-methylitaconimide, N-ethylitaconimide, N-butylitaconimide, N-octylitaconimide, N-2-ethylhexylitaconimide, N-laurylitaconimide, and N-cyclohexylitaconimide; and succinimide monomers such as N-(meth)acryloyloxymethylene succinimide, N-(meth)acryloyl-6-oxyhexamethylene succinimide, and N-(meth)acryloyl-8-oxyoctamethylene succinimide; and isocyanate group-containing monomers such as 2-(meth) acryloyloxyethyl isocyanate.

[1-4. Other copolymerizable monomers]

Examples of the copolymerizable monomer in the acrylic polymer include, in addition to the nitrogen atom-containing monomers, hydroxyl group-containing monomers, and alicyclic structure-containing monomers described above, (meth)acrylic alkoxyalkyl esters [e.g., 2-methoxyethyl (meth)acrylate, 2-ethoxyethyl (meth)acrylate, methoxytriethyleneglycol (meth)acrylate, 3-methoxypropyl (meth)acrylate, 3-ethoxypropyl (meth)acrylate, 4-methoxybutyl (meth) acrylate, and 4-ethoxybutyl (meth)acrylate]; epoxy group-containing monomers [e.g., glycidyl (meth)acrylate and methylglycidyl (meth)acrylate]; sulfonic acid group-containing monomers [e.g., sodium vinylsulfonate]; phosphate group-containing monomers; (meth)acrylic esters having an aromatic hydrocarbon group [e.g., phenyl (meth)acrylate, phenoxyethyl (meth)acrylate, and benzyl (meth)acrylate]; vinyl esters [e.g., vinyl acetate and vinyl propionate]; aromatic vinyl compounds [e.g., styrene and vinyl toluene]; olefins or dienes [e.g., ethylene, propylene, butadiene, isoprene, and isobutylene]; vinyl ethers [e.g., vinyl alkyl ether]; and vinyl chloride.

[1-5. Hydrogenated polyolefinic resin]

The acrylic pressure-sensitive adhesive composition of the present invention is preferably an acrylic pressure-sensitive adhesive composition in which the acrylic polymer is the main component and a hydrogenated polyolefinic resin is formulated. The hydrogenated polyolefinic resin is a material having a low dielectric constant, and by formulating it to the acrylic polymer of the present invention, the dielectric constant is reduced, and in touch panels in which optical members having metal wiring (touch sensor films), such as metal mesh films and silver nanowire films, are laminated, a malfunction of touch operations can be suppressed. The hydrogenated polyolefinic resin is also preferable in respect that a highly-flexible pressure-sensitive adhesive layer can be achieved without requiring lowering the molecular weight of the acrylic polymer and, even when optical members having metal wiring (touch sensor films), such as metal mesh films and silver nanowire films, are laminated, the stress to the metal wiring is sufficiently relaxed to enable display irregularities to be prevented. The hydrogenated polyolefinic resin is also excellent in the compatibility to the acrylic polymer and thus preferable in respect that the transparency of the pressure-sensitive adhesive layer of the present invention can be maintained at a higher level. The hydrogenated polyolefinic resins may be used singly or in combination of two or more.

The hydrogenated polyolefinic resin is preferably one that exhibits liquid flowability at 25°C in respect that a highly-flexible pressure-sensitive adhesive layer can be achieved and, even when optical members having metal wiring (touch sensor films), such as metal mesh films and silver nanowire films, are laminated, the stress to the metal wiring is sufficiently relaxed to enable display irregularities to be prevented. The phrase "the hydrogenated polyolefinic resin exhibits liquid flowability at 25°C" means that the viscosity measured at 25°C with a B-type viscometer is 10,000 mPa·s or less.

The hydrogenated polyolefinic resin is obtained by reducing carbon-carbon double bonds included in a polyolefinic resin by a hydrogenation reaction. The hydrogenated polyolefinic resin, of which carbon-carbon double bonds in the molecular have been reduced, is unlikely to cause inhibition of polymerization in curing the acrylic pressure-sensitive adhesive composition of the present invention with ultraviolet irradiation, for example, to thereby be unlikely to cause decrease in polymerization ratio and lowering of the molecular weight, thus enabling the adhesion reliability of the acrylic pressure-sensitive adhesive composition of the present invention at high temperatures to be maintained at a high level.

The hydrogenation ratio of the hydrogenated polyolefinic resin is preferably 90% or more, more preferably 95% or more, further preferably 97% or more, from the viewpoint of making inhibition of polymerization unlikely to occur and of the adhesion reliability at high temperatures. The upper limit value of the hydrogenation ratio is, but not particularly limited to, theoretically 100% and may be practically 99.9% or less or may be 99.8% or less. The hydrogenation ratio of the hydrogenated polyolefinic resin can be determined by quantifying the amount of double bonds remaining in the hydrogenated polyolefinic resin by $^1$H-NMR measurement or the like.

The iodine value (I g/100 g) of the hydrogenated polyolefinic resin is preferably 30 or less, more preferably 25 or less, further preferably 20 or less, from the viewpoint of making inhibition of polymerization unlikely to occur and of the adhesion reliability at high temperatures. The lower limit value of the iodine value, but not particularly limited to, may be 0.1 or more or may be 0.2 or more. The iodine value is a value as measured in accordance with JIS K 0070-1992.

The number average molecular weight (Mn) of the hydrogenated polyolefinic resin is preferably from 1000 to 5000 in respect of imparting moderate stress relaxation properties and flowability to the pressure-sensitive adhesive layer and improving the compatibility to the acrylic polymer. The number average molecular weight (Mn) is preferably 1000 or more, more preferably 1500 or more, further preferably 1800 or more, in respect that moderate stress relaxation properties and flowability can be imparted to the pressure-sensitive adhesive composition. The number average molecular weight (Mn) is preferably 5000 or less, more preferably 4800 or less, further preferably 4600 or less, in respect of improving the compatibility to the acrylic polymer and enabling the transparency of the acrylic pressure-sensitive adhesive composition of the present invention to be maintained at a higher level.

The polydispersity (Mw/Mn) of the hydrogenated polyolefinic resin is preferably 2.0 or less, 1.8 or less, in respect of imparting moderate stress relaxation properties and flowability to the pressure-sensitive adhesive layer, improving the compatibility to the acrylic polymer, maintaining high-level transparency, and enabling haze to be suppressed. The lower limit value of the polydispersity, but not particularly limited to, may be practically 1.0 or may be 1.1 or more.

The number average molecular weight (Mn) and polydispersity (Mw/Mn) of the hydrogenated polyolefinic resin are values determined by measurement by gel permeation chromatography (GPC) in terms of polystyrene standard.

The hydrogenated polyolefinic resin preferably contains a hydrogenated polyolefin. The acrylic pressure-sensitive adhesive composition of the present invention is suitable from the viewpoint of reducing the dielectric constant and suppressing a malfunction of touch operations in touch panels by containing a hydrogenated polyolefin as the hydrogenated polyolefinic resin.

The hydrogenated polyolefin described above is a hydrogenated product of a polymer (polyolefin) having a constituent unit derived from an olefin. Examples of the hydrogenated polyolefin include hydrogenated products of homopolymers and copolymers of α-olefins such as ethylene, propylene, 1-butene, isobutene, and 1-hexene; diene compounds such as butadiene and isoprene; and aromatic vinyl compounds such as styrene. As the hydrogenated polyolefin, a hydrogenated product of a homopolymer or copolymer of a diene compound is preferable, and examples thereof include hydrogenated polybutadiene and hydrogenated polyisoprene. The hydrogenated polyolefins may be used singly or in combination of two or more.

The hydrogenated polyolefinic resin preferably further contains a hydrogenated polyolefin polyol in addition to the hydrogenated polyolefin, from the viewpoint of reducing the dielectric constant and suppressing a malfunction of touch operations in touch panels.

The hydrogenated polyolefin polyol described above is a compound in which an end of the hydrogenated polyolefin is modified with a hydroxyl group. As the hydrogenated polyolefin polyol, a hydroxyl group-modified product of a hydrogenated product of a homopolymer or copolymer of a diene compound is preferable, and examples thereof include hydrogenated polybutadiene polyol and hydrogenated polyisoprene polyol. The hydrogenated polyolefin polyols may be used singly or in combination of two or more.

The hydrogenated polyolefin and the hydrogenated polyolefin polyol described above are preferably hydrogenated polybutadiene and hydrogenated polybutadiene polyol, respectively, in respect that a highly-flexible pressure-sensitive adhesive layer can be achieved and, even when optical members having metal wiring (touch sensor films), such as metal mesh films and silver nanowire films, are laminated, the stress to the metal wiring is sufficiently relaxed to enable display irregularities to be prevented.

As the hydrogenated polybutadiene, one represented by the following formula (5) is preferable, and as the hydrogenated polybutadiene polyol, one represented by the following formula (6) is preferable.

[Formula 6]

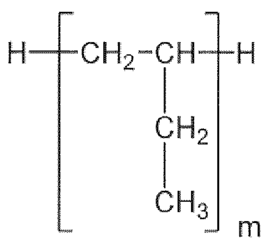

(5)

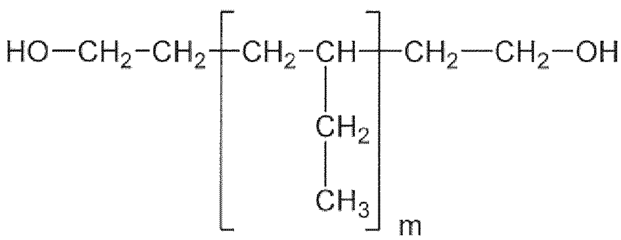

(6)

In the above formulas, m represents the degree of polymerization of the hydrogenated polybutadiene.

As the hydrogenated polyolefin and hydrogenated polyolefin polyol, commercially available products can be used. Examples of commercially available products of the hydrogenated polyolefin include trade names "BI-2000" and "BI-3000" (both manufactured by Nippon Soda Co., Ltd.). Examples of commercially available products of the hydrogenated polyolefin polyol include trade names "GI-1000", "GI-2000", and "GI-3000" (all manufactured by Nippon Soda Co., Ltd.) and trade name "EPOL" (manufactured by Idemitsu Kosan Co., Ltd.).

The content of the hydrogenated polyolefinic resin in the acrylic pressure-sensitive adhesive composition described above is, but not particularly limited to, preferably 5 parts by weight or more, more preferably 10 parts by

weight or more, further preferably 15 parts by weight or more, and may be 20 parts by weight or more based on 100 parts by weight of the acrylic polymer, from the viewpoint of reducing the dielectric constant and suppressing a malfunction of touch operations in touch panels. Meanwhile, the content of the hydrogenated polyolefinic resin is preferably 40 parts by weight or less, more preferably 35 parts by weight or less, further preferably 30 parts by weight or less, from the viewpoint of suppressing increase in the haze and achieving higher transparency and from the viewpoint of enabling adhesive strength and adhesion reliability at high temperatures to be maintained at a high level.

The content of the hydrogenated polyolefin in the acrylic pressure-sensitive adhesive composition described above is, but not particularly limited to, preferably 0.5 parts by weight or more, more preferably 1 part by weight or more, and further preferably 1.5 parts by weight or more based on 100 parts by weight of the acrylic polymer, from the viewpoint of reducing the dielectric constant and suppressing a malfunction of touch operations in touch panels. Meanwhile, the content of the hydrogenated polyolefin is preferably 20 parts by weight or less, more preferably 15 parts by weight or less, further preferably 12 parts by weight or less and may be 10 parts by weight or less or 5 parts by weight or less, from the viewpoint of suppressing increase in the haze and achieving higher transparency and from the viewpoint of enabling adhesive strength and adhesion reliability at high temperatures to be maintained at a high level.

The content of the hydrogenated polyolefin polyol in the acrylic pressure-sensitive adhesive composition described above is, but not particularly limited to, preferably 1 part by weight or more, more preferably 3 parts by weight or more, further preferably 5 parts by weight or more, and may be 10 parts by weight or more or 20 parts by weight or more based on 100 parts by weight of the acrylic polymer, from the viewpoint of reducing the dielectric constant and suppressing a malfunction of touch operations in touch panels. Meanwhile, the content of the hydrogenated polyolefin polyol is preferably 40 parts by weight or less, more preferably 35 parts by weight or less, further preferably 30 parts by weight or less, particularly preferably 25 parts by weight or less from the viewpoint of suppressing increase in the haze and achieving higher transparency and from the viewpoint of enabling adhesive strength and adhesion reliability at high temperatures to be maintained at a high level.

The weight proportion of the content of the hydrogenated polyolefin and the content of the hydrogenated polyolefin polyol (hydrogenated polyolefin/hydrogenated polyolefin polyol) in the acrylic pressure-sensitive adhesive composition described above is, but not particularly limited to, preferably 1/99 or more, more preferably 2/98 or more, and may be 3/98 or more or 4/96 or more, from the viewpoint of reducing the dielectric constant and suppressing a malfunction of touch operations in touch panels. The proportion described above is also preferably 90/10 or less, more preferably 80/20 or less, further preferably 70/30 or less, and may be 55/45 or less, 45/55 or less, or 30/70 or less, from the viewpoint of suppressing increase in the haze and achieving higher transparency.

[1-6. Polyfunctional (meth)acrylate]

The acrylic pressure-sensitive adhesive composition of the present invention preferably further contains a polyfunctional (meth)acrylate. The polyfunctional (meth)acrylate serves as a crosslinking component. Then, the pressure-sensitive adhesive composition is more likely to have moderate cohesion.

Examples of the polyfunctional (meth)acrylate include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, and urethane acrylate. The polyfunctional (meth)acrylates may be used singly or in combination of two or more.

The content (proportion) of the polyfunctional (meth)acrylate is, but not particularly limited to, preferably 0.001 parts by weight or more, more preferably 0.002 parts by weight or more, further preferably 0.005 parts by weight or more, and may be 0.01 parts by weight or more based on 100 parts by weight of the acrylic polymer, from the viewpoint that the pressure-sensitive adhesive layer has moderate cohesion. The content (proportion) of the polyfunctional (meth)acrylate is preferably 0.5 parts by weight or less, more preferably 0.35 parts by weight or less, further preferably 0.2 parts by weight or less, and may be 0.1 parts by weight or less based on 100 parts by weight of the acrylic polymer, in respect that a highly-flexible pressure-sensitive adhesive layer can be achieved and in that the stress to the metal wiring is sufficiently relaxed to enable display irregularities to be prevented.

[1-7. Silane coupling agent]

The acrylic pressure-sensitive adhesive composition of the present invention preferably further contains a silane coupling agent. A case in which a silane coupling agent is contained in the pressure-sensitive adhesive composition is preferable in that excellent adhesiveness to glass (particularly, excellent adhesion reliability to glass at high temperatures and high humidity) is more easily obtained.

Examples of the silane coupling agent described above include, but not particularly limited to, γ-glycidoxypropyltrimethoxysilane, γ-glycidoxypropyltriethoxysilane, γ-aminopropyltrimethoxysilane, and N-phenyl-aminopropyltrimethoxysilane. Of these, γ-glycidoxypropyltrimethoxysilane is preferable. Further examples of the silane coupling agent include commercially available products such as trade name "KBM-403" (manufactured by Shin-Etsu Chemical Co., Ltd.). The silane coupling agents may be used singly or in combination of two or more.

The content of the silane coupling agent described above is, but not particularly limited to, preferably from 0.01 to 1 part by weight, more preferably from 0.03 to 0.5 parts by weight based on 100 parts by weight of the acrylic polymer (A), in respect of improving the adhesion reliability to glass.

[1-8. Crosslinking agent]

The acrylic pressure-sensitive adhesive composition of the present invention is preferably not a solvent type, as described above, that is, is free of or substantially free of a crosslinking agent.

Examples of the crosslinking agent described above include isocyanate crosslinking agents, epoxy crosslinking agents, melamine crosslinking agents, and peroxide crosslinking agents and additionally include urea crosslinking agents, metal alkoxide crosslinking agents, metal chelate crosslinking agents, metal salt crosslinking agents, carbodiimide crosslinking agents, oxazoline crosslinking agents, aziridine crosslinking agents, and amine crosslinking agents. Particularly, the acrylic pressure-sensitive adhesive composition of the present invention is preferably free of or substantially free of an isocyanate crosslinking agent and/or epoxy crosslinking agent and is preferably free of or substantially free of an isocyanate crosslinking agent, as the crosslinking agent.

Examples of the isocyanate crosslinking agent (polyfunctional isocyanate compound) described above include lower aliphatic polyisocyanates such as 1,2-ethylene diisocyanate, 1,4-butylene diisocyanate, and 1,6-hexamethylene diisocyanate; alicyclic polyisocyanates such as cyclopentylene diisocyanate, cyclohexylene diisocyanate, isophorone diisocyanate, hydrogenated tolylene diisocyanate, and hydrogenated xylene diisocyanate; and aromatic polyisocyanates such as 2,4-tolylene diisocyanate, 2,6-tolylene diisocyanate, 4,4'-diphenylmethane diisocyanate, and xylylene diisocyanate. Examples of the isocyanate crosslinking agent also include commercially available products such as a trimethylolpropane/tolylene diisocyanate adduct [manufactured by Nippon Polyurethane Industry Co., Ltd., trade name "Coronate L"], a trimethylolpropane/hexamethylene diisocyanate adduct [manufactured by Nippon Polyurethane Industry Co., Ltd., trade name "Coronate HL"], and a trimethylolpropane/xylylene diisocyanate adduct [manufactured by Mitsui Chemicals, Inc., trade name "TAKENATE D-110N"].

Examples of the epoxy crosslinking agent (polyfunctional epoxy compound) described above include N,N,N',N'-tetraglycidyl-m-xylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, diglycidyl adipate, diglycidyl o-phthalate, triglycidyl-tris (2-hydroxyethyl) isocyanurate, resorcin diglycidyl ether, and bisphenol-S-diglycidyl ether and additionally include epoxy resins having 2 or more epoxy groups in the molecule. Examples of the epoxy crosslinking agent also include commercially available products such as trade name "TETRAD C" manufactured by Mitsubishi Gas Chemical Company, Inc.

In the acrylic pressure-sensitive adhesive composition of the present invention, the phrase "substantially free of" a crosslinking agent refers to actively formulating no crosslinking agent except when a crosslinking agent is inevitably mixed. Specifically, it can be said that one in which the content of the crosslinking agent in the pressure-sensitive adhesive composition is 1.0% by weight or less (preferably 0.5% by weight or less, further preferably 0.2% by weight or less) based on the total amount of the pressure-sensitive adhesive composition (total weight, 100% by weight) is substantially free of a crosslinking agent. One in which the content thereof is preferably 0.05 parts by weight or less (e.g., from 0 to 0.05 parts by weight), more preferably 0.01 parts by weight or less (e.g., from 0 to 0.01 parts by weight), further preferably 0.001 parts by weight or less (e.g., from 0 to 0.001 parts by weight) based on the total amount of the monomer components constituting the acrylic polymer (100 parts by weight) also can be said to be substantially free of a crosslinking agent.

[1-9. Additives]

In the acrylic pressure-sensitive adhesive composition of the present invention, known additives such as a crosslinking accelerator, a tackifier resin (a rosin derivative, a polyterpene resin, oil-soluble phenol, or the like), an antiaging agent, a filler, a colorant (dye, pigment, or the like), a UV absorbing agent, a chain transfer agent, a plasticizer, a softener, a surfactant, an antistatic agent, an anti-corrosive agent, and an antioxidant may be contained as required as long as characteristics of the present invention are not impaired. From the viewpoint of suppressing increase in the haze of the pressure-sensitive adhesive layer of the present invention, the acrylic pressure-sensitive adhesive composition of the present invention is preferably substantially free of an anti-corrosive agent and an antioxidant. Such additives may be used singly or in combination of two or more.

From the viewpoint of suppressing increase in the haze of the pressure-sensitive adhesive layer of the present invention, the acrylic pressure-sensitive adhesive composition of the present invention is preferably substantially free of an antioxidant. The phrase "substantially free of" an antioxidant refers to actively formulating no antioxidant except when an antioxidant is inevitably mixed. Specifically, it can be said that one in which the content of the antioxidant in the pressure-sensitive adhesive composition is 1.0% by weight or less (preferably 0.5% by weight or less, further preferably 0.2% by weight or less) based on the total amount of the pressure-sensitive adhesive composition (total weight, 100% by weight) is substantially free of an anti-corrosive agent and/or antioxidant. One in which the content thereof is, for example, 0.5 parts by weight or less (e.g., from 0 to 0.5 parts by weight), preferably 0.05 parts by weight or less (e.g., from 0 to 0.05 parts by weight), more preferably 0.01 parts by weight or less (e.g., from 0 to 0.01 parts by weight), further preferably 0.001 parts by weight or less (e.g., from 0 to 0.001 parts by weight) based on the total amount of the monomer components constituting the acrylic polymer (100 parts by weight) also can be said to be substantially free of an antioxidant.

[1-10. Preparation of acrylic pressure-sensitive adhesive composition]

The acrylic pressure-sensitive adhesive composition of the present invention can be prepared by mixing and homogeneously stirring an acrylic polymer, and as required, a hydrogenated polyolefinic resin, a polyfunctional (meth) acrylate, a silane coupling agent, and other additives. In this case, from the viewpoint of adjusting the elastic modulus of the pressure-sensitive adhesive layer, a monomer component constituting the acrylic polymer may be formulated. When the monomer component constituting the acrylic polymer is used for adjusting the elastic modulus, in order to maintain the above-described properties of the pressure-sensitive adhesive layer, the acrylic polymer is preferably prepared with a monomer mixture from which the monomer component used has been removed. The monomer component used for adjusting the elastic modulus is, but not particularly limited to, for example, preferably the functional group-containing monomer described above, and more preferably the hydroxyl group-containing monomer described above.

The amount to be used of the monomer component used for adjusting the elastic modulus is, but not particularly limited to, preferably from 5 to 30 parts by weight, and more preferably from 10 to 20 parts by weight based on 100 parts by weight of the total monomer units of the acrylic polymer (the total amount of the monomer components constituting the acrylic polymer), from the viewpoint of moderately adjusting the elastic modulus of the pressure-sensitive adhesive layer.

[2. Pressure-sensitive adhesive sheet]

The pressure-sensitive adhesive sheet of the present invention is only required to have the pressure-sensitive adhesive layer of the present invention (the pressure-sensitive adhesive layer formed of the acrylic pressure-sensitive adhesive composition of the present invention), and other respects are not particularly limited.

The pressure-sensitive adhesive sheet of the present invention may be a double-coated pressure-sensitive adhesive sheet of which both the surfaces is formed as a pressure-sensitive adhesive layer surface or may be a single-coated pressure-sensitive adhesive sheet of which only one surface is formed as a pressure-sensitive adhesive layer surface. Of these, from the viewpoint of laminating two members, the pressure-sensitive adhesive sheet is preferably a double-coated pressure-sensitive adhesive sheet. When the "pressure-sensitive adhesive sheet" is referred to herein, a tape-like sheet, that is, "pressure-sensitive adhesive tape" is also included. A surface of the pressure-sensitive adhesive layer herein may be called an "adhesive face".

The pressure-sensitive adhesive sheet of the present invention may be provided with a release liner on the adhesive face until used.

The pressure-sensitive adhesive sheet of the present invention may be a so-called "baseless type pressure-sensitive adhesive sheet that has no base (base layer) (hereinafter, may be referred to as a "baseless pressure-sensitive adhesive sheet") or may be a pressure-sensitive adhesive sheet having a base (hereinafter, may be referred to as a "pressure-sensitive adhesive sheet with a base"). Examples of the baseless pressure-sensitive adhesive sheet described above include a double-coated pressure-sensitive adhesive sheet consisting only of the pressure-sensitive adhesive layer described above and a double-coated pressure-sensitive adhesive sheet comprising the pressure-sensitive adhesive layer and a pressure-sensitive adhesive layer other than the pressure-sensitive adhesive layer (may be referred to as "another pressure-sensitive adhesive layer"). Meanwhile, examples of the pressure-sensitive adhesive sheet having a base include a pressure-sensitive adhesive sheet having the pressure-sensitive adhesive layer on at least one face of the base. Of these, the baseless pressure-sensitive adhesive sheet (baseless double-coated pressure-sensitive adhesive sheet) is preferable, and the baseless double-coated pressure-sensitive adhesive sheet consisting only of pressure-sensitive adhesive layer is more preferable. The "base (base layer)" does not include a release liner to be separated when the pressure-sensitive adhesive sheet is used (laminated).

Figure 1 is a schematic view (cross-sectional view) illustrating a specific example of a preferable form of the pressure-sensitive adhesive sheet of the present invention, where 1 represents a pressure-sensitive adhesive sheet, 10 represents a pressure-sensitive adhesive layer of the present invention, and 11 and 12 represent release liners. In Figure

1, the pressure-sensitive adhesive sheet 1 is a baseless double-coated pressure-sensitive adhesive sheet, and adhesive faces on both sides of the pressure-sensitive adhesive layer 10 are protected by the release liners 11 and 12.

Since the pressure-sensitive adhesive layer 10 is composed of the pressure-sensitive adhesive layer of the present invention, in the pressure-sensitive adhesive sheet 1, cloudiness due to humidification is unlikely to occur even if returned to normal temperature after being placed under high temperature and high humidity conditions.

The thickness (total thickness) of the pressure-sensitive adhesive sheet of the present invention is, but not particularly limited to, preferably from 12 to 350 μm, and more preferably from 12 to 300 μm. A case in which the thickness is equal to or larger than a certain thickness is preferable in touch panels in which optical members having metal wiring (touch sensor films), such as metal mesh films and silver nanowire films, are laminated, because the stress to the metal wiring is sufficiently relaxed to enable display irregularities to be prevented. A case in which the thickness is equal to or smaller than a certain thickness is preferable in that an excellent appearance is more easily retained during production and storage as a roll and adhesive stains are unlikely to occur during cutting processing. The thickness of the release liner is intended not to be included in the thickness of the pressure-sensitive adhesive sheet of the present invention.

The pressure-sensitive adhesive sheet of the present invention is preferably produced in accordance with a known or customary production method, but not particularly limited thereto. For example, the pressure-sensitive adhesive sheet of the present invention, when being a baseless pressure-sensitive adhesive sheet, can be obtained by forming the pressure-sensitive adhesive layer described above by the method described above on a release liner. Alternatively, the pressure-sensitive adhesive sheet of the present invention, when being a pressure-sensitive adhesive sheet with a base, may be obtained by forming the pressure-sensitive adhesive layer directly on the face of the base (direct application method), or may be obtained by once forming the pressure-sensitive adhesive layer on a release liner and providing the pressure-sensitive adhesive layer on the base by transferring (laminating) the pressure-sensitive adhesive layer onto the base (transfer method).

The pressure-sensitive adhesive sheet of the present invention may have other layers in addition to the pressure-sensitive adhesive layer described above. Examples of the other layers include a different pressure-sensitive adhesive layer (pressure-sensitive adhesive layer other than the pressure-sensitive adhesive layer of the present invention), an intermediate layer, and an undercoat layer. The pressure-sensitive adhesive sheet of the present invention may have 2 or more other layers.

Examples of the base in a case in which the pressure-sensitive adhesive sheet of the present invention is a pressure-sensitive adhesive sheet with a base include, but not particularly limited to, plastic films and various optical films such as an antireflection (AR) film, a polarizing plate, and a retardation plate. Examples of materials for the plastic films and the like include plastic materials, such as polyester resins such as polyethylene terephthalate (PET), acrylic resins such as polymethyl methacrylate (PMMA), polycarbonate, triacetyl cellulose (TAC), polysulfone, polyarylate, polyimide, polyvinyl chloride, polyvinyl acetate, polyethylene, polypropylene, ethylene-propylene copolymers, and cyclic olefinic polymers such as trade name "ARTON (cyclic olefinic polymer, manufactured by JSR Corporation)" and trade name "ZEONOR (cyclic olefinic polymer, manufactured by Zeon Corporation)". These plastic materials may be used singly or in combination of two or more. The "base" described above is a portion to be laminated to an object together with the pressure-sensitive adhesive layer when the pressure-sensitive adhesive sheet is laminated to the object. The release liner to be separated in use (lamination) of the pressure-sensitive adhesive sheet is not included in the "base".

The base described above is preferably transparent. The total light transmittance in the visible light wavelength region of the base (in accordance with JIS K 7361-1) is, but not particularly limited to, preferably 85% or more, more preferably 88% or more. The haze of the base (in accordance with JIS K7136) is, but not particularly limited to, preferably 1.0% or less, more preferably 0.8% or less. Examples of such a transparent base include PET films, and non-oriented films such as trade name "ARTON" and trade name "ZEONOA".

The thickness of the base is, but not particularly limited to, preferably from 12 to 500 μm. The base may have either of a single layer form and a multilayer form. The surface of the base may be appropriately subjected to a known and customary surface treatment, for example, a physical treatment such as a corona discharge treatment or a plasma treatment or a chemical treatment such as a base coat treatment.

The pressure-sensitive adhesive sheet of the present invention may be provided with a release liner on the adhesive face until used. When the pressure-sensitive adhesive sheet of the present invention is a double-coated pressure-sensitive adhesive sheet, each adhesive face may be protected by a release liner or may be protected in a roll form wound with one release liner having a release face on each side. The release liner is used as a protective material of the pressure-sensitive adhesive layer and peeled off in lamination of the sheet onto the object. When the pressure-sensitive adhesive sheet of the present invention is a baseless pressure-sensitive adhesive sheet, the release liner also serves as a support for the pressure-sensitive adhesive layer. The release liner may not necessarily be provided.

Examples of the release liner described above include, but not particularly limited to, a release liner having a release layer (release-treated layer) on at least one surface of the release liner base, a low-adhesive release liner comprising a fluorine polymer, and a low-adhesive release liner comprising a non-polar polymer. Examples of the fluorine polymer described above include, but not particularly limited to, polytetrafluoroethylene, polychlorotrifluoroethylene,

polyvinyl fluoride, polyvinylidene fluoride, tetrafluoroethylene-hexafluoropropylene copolymers, and chlorofluoroethylene-vinylidene fluoride copolymers. Examples of the non-polar polymer described above include, but not particularly limited to, olefinic resins such as polyethylene (PE) and polypropylene (PP). Of these, a release liner having a release layer on at least one surface of the release liner base is preferably used.

Examples of the release liner base described above include, but not particularly limited to, plastic films. Examples of such plastic films include plastic films constituted by a polyester resin such as polyethylene terephthalate (PET), polyethylene naphthalate (PEN), or polybutylene terephthalate (PBT); an olefinic resin including α-olefin as a monomer component, such as polyethylene (PE), polypropylene (PP), polymethylpentene (PMP), an ethylene-propylene copolymer, or an ethylenevinyl acetate copolymer (EVA) ; polyvinyl chloride (PVC); a vinyl acetate resin; polycarbonate (PC); polyphenylene sulfide (PPS); an amide resin such as polyamide (nylon) or all-aromatic polyamide (aramide); a polyimide resin; or polyether ether ketone (PEEK). Of these, plastic films formed of a polyester resin are preferable, and PET films are further preferable, from the viewpoint of processability, availability, workability, dustproofness, costs, and the like.

Examples of a release treatment agent constituting the release layer described above include, but not particularly limited to, release treatment agents such as silicone release treatment agents, fluorine release treatment agents, long chain alkyl release treatment agents, and molybdenum sulfide. Of these, silicone release treatment agents are preferable from the viewpoint of release control and stability over time. The release treatment agent may be used singly or in combination of two or more.

The release layer may be a single layer, or may have a lamination structure in which 2 or more layers are laminated as long as characteristics of the present invention are not impaired.

Of these, one example of a specific configuration of the release liner include a configuration in which a PET film is used as a release liner base and a release layer including a silicone release treatment agent is provided on at least one surface of the release liner base. Of both the surfaces of the release liner, the surface that is opposite to the side in contact with the pressure-sensitive adhesive layer and on which no release liner is provided may be referred to as the "back face" of the release liner.

In the release liner, a carrier material may be laminated on the back face, from the viewpoint that punching processability and handleability are ensured and thickening is made while bendability is retained. Examples of such a carrier material include, but not particularly limited to, a configuration in which two PET film bases are laminated with the pressure-sensitive adhesive layer intervened therebetween and a configuration in which a COP film base and a PET film base are laminated with the pressure-sensitive adhesive layer intervened therebetween. The release liner may not have a carrier material.

The release liner may have a conductive-treated layer on the release layer and/or back face from the viewpoint of suppressing charging generated during transport or separation of the release liner to reduce deposition and mixing of foreign matter. Examples of such conductive-treated layers include, but not particularly limited to, a coating-treated layer that includes, as the main component, a composite of poly(3,4-ethylenedioxythiophene) (PEDOT) and polystyrene sulfonic acid (PSS), which is a conductive polymer. The release liner may not have a conductive-treated layer.

The release liner may be produced by a known and customary method. The carrier material and conductive-treated layer can be prepared by lamination on the release layer and/or back face of the release liner by a known method. The release liner of the present invention may have other layers (e.g., an intermediate layer, an undercoat layer, and the like) as long as characteristics of the present invention are not impaired.

The thickness of the release liner is, but not particularly limited to, preferably from 12 to 200 μm, more preferably from 25 to 150 μm, further preferably 38 to 125 μm, from the viewpoint of, for example, costs, the handleability of the pressure-sensitive adhesive sheet in lamination operation, and the like.

When the pressure-sensitive adhesive sheet of the present invention is a double-coated pressure-sensitive adhesive sheet of a double release liner type, a release liner is provided on one adhesive face, and a release liner is provided also on the other adhesive face. In such a case, both the release liners each are preferably a release liner in which only one of the surfaces is a release layer (particularly, a release liner in which one surface of the plastic base has a release layer constituted by a silicone release agent). The release liner is provided such that the release layer is in contact with the adhesive face.

Further, when the pressure-sensitive adhesive sheet of the present invention is a double-coated pressure-sensitive adhesive sheet of a double release liner type, a difference in the release strength is preferably provided between the two release liners. For example, when the pressure-sensitive adhesive sheet of the present invention is a double-coated pressure-sensitive adhesive sheet of a double release liner type, it is preferable that one of the release liners be used on the adhesive face to be used (laminated) first (also referred to as the "first face side") and the other release liner be used on the adhesive face to be used (laminated) later (also referred to as the "second face side"). Accordingly, it is preferable that the one release liner be used as the release liner on the "light release side", which can be separated with a smaller strength (release strength), and the other release liner be used as the release liner on the "heavy release side", which requires a larger strength (release strength) for the release liner to be separated from the pressure-sensitive adhesive layer. Herein, the above-described release liner on the light release side may be referred to as the "light release

liner", and the above-described release liner on the heavy release face side may be referred to as the "heavy release liner".

When the pressure-sensitive adhesive sheet of the present invention is a double-coated pressure-sensitive adhesive sheet of a single release liner type, a release liner is provided on one adhesive face, and winding this release liner allows the other adhesive face of the pressure-sensitive adhesive body also to be protected by the release liner. When the pressure-sensitive adhesive sheet of the present invention is a single release liner type, both the surfaces of the release liner each are preferably a release layer (release-treated layer). Of both the release layer of the release liner, the release layer on the side to be wound and in contact with the adhesive face may be particularly referred to as the "back face release layer". The back face release layer side of the release liner is usually used for the "first face side" of the double-coated pressure-sensitive adhesive sheet.

The pressure-sensitive adhesive layer of the present invention, to which stress relaxation properties have been imparted, is preferable in respect that roughness and deformation of the face of the adhesive of the pressure-sensitive adhesive layer during separation of the release liner and occurrence of stick slip are suppressed to thereby enable the pressure-sensitive adhesive sheet to be stably used. Stick slip is a vibration phenomenon that occurs at a release face, breaking the object by causing damage thereto or leaving an adhesive residue partially on the object.

When the pressure-sensitive adhesive sheet of the present invention is a double-coated pressure-sensitive adhesive sheet, in respect that roughness and deformation of the face of the adhesive of the pressure-sensitive adhesive layer during separation of the release liner and occurrence of stick slip are suppressed to thereby enable the pressure-sensitive adhesive sheet to be stably used, the release strength (release liner release strength) from the pressure-sensitive adhesive layer described above on the first face side (light release side) of the release liner is from 0.01 to 0.5 N/50 mm, preferably from 0.05 to 0.25 N/50 mm, the release strength (release liner release strength) from the pressure-sensitive adhesive layer (e.g., the above-described acrylic pressure-sensitive adhesive layer, the above-described rubber pressure-sensitive adhesive layer, or the like) on the second face side (heavy release side) of the release liner is from 0.1 to 1.00 N/50 mm, preferably from 0.2 to 0.85 N/50 mm, and it is preferable that the release liner release strength on the heavy release face side be always larger than the release liner release strength on the light release face side and a release difference of the order of from 1.1 to 10.0 times be present.

Particularly, when the pressure-sensitive adhesive sheet of the present invention is a double-coated pressure-sensitive adhesive sheet, in respect that a so-called premature separation phenomenon, roughness and deformation of the face of the adhesive of the pressure-sensitive adhesive layer during separation of the release liner, and occurrence of stick slip are suppressed to thereby enable the pressure-sensitive adhesive sheet to be stably used, the difference between the release strength (release liner release strength) from the pressure-sensitive adhesive layer of the heavy release liner and the release strength (release liner release strength) from the pressure-sensitive adhesive layer of the light release liner is preferably 0.01 N/50 mm or more, more preferably 0.02 N/50 mm or more, further preferably 0.05 N/50 mm or more, particularly preferably 0.06 N/50 mm or more.

The release liner release strength described above means a 180° peel pressure-sensitive adhesive strength of the release liner to the pressure-sensitive adhesive layer as measured by a 180° release test. The tensile speed is 300 mm/minute.

Since the pressure-sensitive adhesive sheet of the present invention has the pressure-sensitive adhesive layer of the present invention (the pressure-sensitive adhesive layer formed of the acrylic pressure-sensitive adhesive composition of the present invention), cloudiness due to humidification is unlikely to occur even if returned to normal temperature after being placed under high temperature and high humidity conditions. The pressure-sensitive adhesive sheet of the present invention is also excellent in flexibility and can prevent display irregularities of a display device and an input device even when optical members having metal wiring (touch sensor films), such as metal mesh films and silver nanowire films, are laminated. The pressure-sensitive adhesive sheet of the present invention is further excellent in adhesiveness, foaming and peeling resistance, and level difference conformability.

For this reason, the pressure-sensitive adhesive sheet of the present invention is usefully used for laminating optical members such as polarizing films, retardation films, optical compensation films, touch sensor films, and cover films on an image display panel in image display devices, as well as touch panels in which touch sensors are incorporated in these image display devices, or for laminating these optical members to each other. The pressure-sensitive adhesive sheet of the present invention is usefully used also for an object that easily generates foaming at the interface at high temperatures. For example, polymethyl methacrylate resin (PMMA) may contain an unreacted monomer and thus easily generates foaming due to foreign matter at high temperatures. Polycarbonate (PC) easily generates outgassing of water and carbon dioxide at high temperatures. The pressure-sensitive adhesive sheet of the present invention is excellent in foaming and peeling resistance and thus usefully used also for a plastic object containing such resins.

The pressure-sensitive adhesive sheet of the present invention is usefully used also for an object having a large linear expansion coefficient, in addition to an object having a small linear expansion coefficient. Examples of the above-described object having a small linear expansion coefficient include, but not particularly limited to, glass plates (linear expansion coefficient: $0.3 \times 10^{-5}$ to $0.8 \times 10^{-5}$/°C) and polyethylene terephthalate bases (PET films, linear expansion coefficient: $1.5 \times 10^{-5}$ to $2 \times 10^{-5}$/°c). Examples of the above-described object having a large linear expansion coefficient

include, but not particularly limited to, resin bases having a large linear expansion coefficient, and more specific examples thereof include polycarbonate resin bases (PC, linear expansion coefficient: $7 \times 10^{-5}$ to $8 \times 10^{-5}$/°C), polymethyl methacrylate resin bases (PMMA, linear expansion coefficient: $7 \times 10^{-5}$ to $8 \times 10^{-5}$/°C), and cycloolefin polymer bases (COP, linear expansion coefficient: $6 \times 10^{-5}$ to $7 \times 10^{-5}$/°C), trade name "ZEONOR" (manufactured by Zeon Corporation) and trade name "ARTON " (manufactured by JSR Corporation).

The pressure-sensitive adhesive sheet of the present invention is usefully used for lamination of an object having a small linear expansion coefficient and an object having a large linear expansion coefficient. Specifically, the pressure-sensitive adhesive sheet of the present invention is preferably used for lamination of a glass object (e.g., a glass plate, chemically reinforced glass, a glass lens, or the like) and the above-described resin base having a large linear expansion coefficient.

As described above, the pressure-sensitive adhesive sheet of the present invention is useful for lamination of objects of various materials, and particularly usefully used for lamination of a glass object and a plastic object.

Further, the pressure-sensitive adhesive sheet of the present invention is usefully used also for objects having a level difference on the surface thereof such as optical members (touch sensor films) having metal wiring, such as metal mesh films and silver nanowire films, in addition to objects having a smooth surface. Particularly, the pressure-sensitive adhesive sheet of the present invention is usefully used for lamination of a glass object and the above-described resin base having a large linear expansion coefficient, even when at least one of the glass object and the resin base having a large linear expansion coefficient has a level difference on the surface thereof.

The pressure-sensitive adhesive sheet of the present invention is preferably used in applications for production of mobile electronic devices. Examples of the mobile electronic devices described above include mobile phones, PHS's, smartphones, tablets (tablet-type computers), mobile computers (mobile PC's), personal digital assistants (PDA's), electronic organizers, portable broadcast receiving devices such as portable televisions and portable radios, portable game machines, portable audio players, portable DVD players, cameras such as digital cameras, and camcorder-type video cameras.

The pressure-sensitive adhesive sheet of the present invention is preferably used for, for example, lamination of members or modules composing a mobile electronic device, fixing of a member or a module composing a mobile electronic device to a housing, and the like. More specific examples include lamination of cover glass or a lens (particularly a glass lens) and a touch panel or a touch sensor film (particularly, a touch sensor film having metal wiring such as a metal mesh film or a silver nanowire film), lamination of a polarizing film and a touch panel or a touch sensor, lamination of a display panel and a touch panel or a touch sensor film, fixing of cover glass or a lens (particularly a glass lens) to a housing, fixing of a display panel to a housing, fixing of an input device such as a sheet keyboard, a touch panel, or the like to a housing, lamination of the protection panel of an information display unit and a housing, lamination of housings, lamination of a housing and a decorative sheet, and fixing and lamination of various members or modules composing a mobile electronic device. Herein, a display panel refers to a structure composed of at least a lens (particularly a glass lens) and a touch panel. A lens herein is a concept including both of a transparent body that exhibits an action of light refraction and a transparent body that has no action of light refraction. That is, the lens herein also includes a mere window panel having no refractive action.

Further, the pressure-sensitive adhesive sheet of the present invention is preferably used for optical applications. That is, the pressure-sensitive adhesive sheet of the present invention is preferably an optical pressure-sensitive adhesive sheet for use in optical applications. More specifically, the pressure-sensitive adhesive sheet of the present invention is preferably used for, for example, applications of laminating optical members (for lamination of optical members), production applications of products in which the optical member is used (optical products), and the like.

[3. Optical member with pressure-sensitive adhesive layer, image display device, and touch panel]

It is only required that the optical member with pressure-sensitive adhesive layer of the present invention be an optical member with pressure-sensitive adhesive layer, wherein the pressure-sensitive adhesive sheet of the present invention is laminated on at least one face of the optical member, and other respects are not particularly limited. The pressure-sensitive adhesive layer of the optical member with pressure-sensitive adhesive layer of the present invention may be provided with a release liner on the adhesive face until used, but a release liner may not be provided.

Since the optical member with pressure-sensitive adhesive layer of the present invention is formed by laminating the pressure-sensitive adhesive sheet of the present invention, cloudiness due to humidification is unlikely to occur even if returned to normal temperature after being placed under high temperature and high humidity conditions. The optical member with pressure-sensitive adhesive layer of the present invention also has high flexibility, sufficiently relaxes the stress to metal wiring to enable display irregularities to be prevented, and is also excellent in adhesion reliability, particularly adhesion reliability at high temperatures.

The optical member with pressure-sensitive adhesive layer of the present invention may be one in which the pressure-sensitive adhesive sheet of the present invention is laminated to an optical member having metal wiring (touch

sensor film), such as a metal mesh film or silver nanowire film. In such a case, the pressure-sensitive adhesive sheet of the present invention is preferably laminated on the face of the touch sensor film on the side where the metal wiring is present.

Figure 2 is a schematic view (cross-sectional view) illustrating a specific example of a preferable form of the optical member with pressure-sensitive adhesive layer of the present invention.

In Figure 2(a), 2A represents an optical member with pressure-sensitive adhesive layer, 20 represents a pressure-sensitive adhesive layer of the present invention, 21 represents an optical member, and 22 represents a release liner. The pressure-sensitive adhesive layer 20 is laminated on one face of the optical member 21, and the adhesive face of the pressure-sensitive adhesive layer 20 on the opposite side of the optical member 21 is protected by the release liner 22.

In Figure 2(b), 2B represents an optical member with pressure-sensitive adhesive layer (touch sensor film with pressure-sensitive adhesive layer), 20 represents a pressure-sensitive adhesive layer of the present invention, 23 represents a touch sensor film, 22 represents a release liner, and 24 represents metal wiring. The pressure-sensitive adhesive layer 20 is laminated on the face of the touch sensor film 23 where the metal wiring 24 is formed, and the adhesive face of the pressure-sensitive adhesive layer 20 on the opposite side of the touch sensor film 23 is protected by the release liner 22.

Since the pressure-sensitive adhesive layer 20 is composed of the pressure-sensitive adhesive layer of the present invention, in the optical member with pressure-sensitive adhesive layer 2A and the touch sensor film with pressure-sensitive adhesive layer 2B, cloudiness due to humidification is unlikely to occur even if returned to normal temperature after being placed under high temperature and high humidity conditions.

From the viewpoint of obtaining a further excellent corrosion prevention effect, the optical member with pressure-sensitive adhesive layer described above further preferably has a further pressure-sensitive adhesive layer laminated on the opposite side of the optical member from the side having the pressure-sensitive adhesive layer. Such a pressure-sensitive adhesive layer is preferably the pressure-sensitive adhesive layer of the present invention.

Examples of materials constituting the metal wiring include, but not particularly limited to, metals such as titanium, silicon, niobium, indium, zinc, tin, gold, silver, copper, aluminum, cobalt, chromium, nickel, lead, iron, palladium, platinum, tungsten, zirconium, tantalum, and hafnium. Further examples include ones containing 2 or more of these metals and alloys including these metals as the main component. Of these, in respect of electrical conductivity, gold, silver, and copper are preferable, and in respect of electrical conductivity and costs, silver and copper are more preferable. That is, the metal wiring is preferably silver wiring and/or copper wiring, and particularly, copper mesh wiring, silver mesh wiring, and silver nanowire are preferable. For the purpose of higher anti-corrosion, an oxide film or metal-coated film may be provided on the metal wiring.

An optical member refers to a member having optical properties (e.g., polarizability, photorefractivity, light scattering, light reflectivity, optical transparency, optical absorptivity, optical diffractive ability, optical rotatory, and visibility). Examples of a base composing the optical member include, but not particularly limited to, bases composing devices (optical devices) such as image display devices and touch panels or bases for use in these devices. Examples thereof include polarizing films, wavelength plates, retardation films, optical compensation films, brightness enhancing films, light-guiding panels, reflective films, antireflective films, hard-coated films (films obtained by subjecting at least one face of plastic films such as PET films to hard coat treatment), transparent conductive films (e.g., plastic films having an ITO layer on the surface thereof (preferably, ITO films such as PET-ITO, polycarbonate, and cycloolefin polymer)), design films, decorative films, surface-protective plates, prisms, lenses, color filters, transparent bases (glass bases such as glass sensors, glass display panels (such as LCD's), and glass plates having a transparent electrode), and further, bases in which these are laminated (these may be collectively referred to as "functional films"). These films may also have metal wiring such as a metal nanowire layer and an electrically-conductive polymer layer. On these films, metallic thin wires may be mesh-printed. The "plates" and "films" described above are each intended to include one in the form of plate, film, sheet, or the like. For example, "polarizing films" are intended to include "polarizing plates", "polarizing sheets", and the like. The "films" are intended to include film sensors and the like.

Particularly, the pressure-sensitive adhesive sheet of the present invention can be suitably used in transparent conductive films (metal mesh films, silver nanowire films) in which the metal wiring described above is metal mesh wiring or silver nanowire, particularly, in optical members (touch sensor films) having a metal mesh film. When optical members having metal wiring such as metal mesh films and silver nanowire films are laminated with a pressure-sensitive adhesive sheet intervened therebetween, there is a problem in that display irregularities are likely to occur in the periphery of an image display panel due to stress strain applied to the pressure-sensitive adhesive around the metal wiring or the like. Accordingly, the pressure-sensitive adhesive layer of a pressure-sensitive adhesive sheet for use in laminating optical members having metal wiring is required to have flexibility to relax the stress to the metal wiring in order to prevent such display irregularities.

In the pressure-sensitive adhesive sheet of the present invention, the pressure-sensitive adhesive layer of the present invention has high flexibility and can sufficiently relax the stress to the metal wiring to enable display irregularities to be prevented even when a film having metal wiring such as a metal mesh film or silver nanowire film is laminated. In

addition, in image display devices and touch panels having the pressure-sensitive adhesive sheet of the present invention, cloudiness due to humidification is unlikely to occur even if returned to normal temperature after being placed under high temperature and high humidity conditions, and the visibility of the image display device can be maintained.

Examples of the image display device include liquid crystal display devices, organic EL (electroluminescent) display devices, PDPs (plasma display panels), and electronic paper.

Examples of bases composing the optical members include, but not particularly limited to, bases comprising glass, acryl resin, polycarbonate, polyethylene terephthalate, a cycloolefin polymer, a metal thin film (e.g., bases in a sheet, film, or plate form), or the like. The "optical members" in the present invention are intended to also include members that serve to decorate or protect an image display device and a touch panel while keeping the visibility of the devices (design films, decorative films, surface-protective films, and the like), as described above.

When the pressure-sensitive adhesive sheet of the present invention is a pressure-sensitive adhesive sheet with base and the pressure-sensitive adhesive sheet composes a member having optical properties, the base described above can be regarded as the same as the substrate described above, and the pressure-sensitive adhesive sheet described above can be said to be also the optical member with pressure-sensitive adhesive layer of the present invention.

When the pressure-sensitive adhesive sheet of the present invention is a pressure-sensitive adhesive sheet having a base, and the functional film is used as the base, the pressure-sensitive adhesive sheet of the present invention also can be used as a "pressure-sensitive adhesive functional film" that has the pressure-sensitive adhesive layer on at least one face of the functional film.

Figure 3 is a schematic view (cross-sectional view) illustrating a specific example of a preferable form of the image display device of the present invention.

In Figure 3, 3 represents an image display device, 30 and 31 represent pressure-sensitive adhesive layers of the present invention, 32 represents an image display panel, 33 represents a polarizing film, and 34 represents a transparent substrate. In the image display device 3, the image display panel 32, the pressure-sensitive adhesive layer 30, the polarizing film 33, the pressure-sensitive adhesive layer 31, and the transparent substrate 34 are laminated in this order.

Since the pressure-sensitive adhesive layers 30 and 31 are composed of the pressure-sensitive adhesive layer of the present invention, in the image display device 3, cloudiness due to humidification is unlikely to occur even if returned to normal temperature after being placed under high temperature and high humidity conditions, and excellent visibility can be maintained. One of the pressure-sensitive adhesive layers 30 and 31 does not have to be composed of the pressure-sensitive adhesive layer of the present invention.

The touch panel of the present invention is an image display device in which an optical member having metal wiring (touch sensor film), such as a metal mesh film or silver nanowire film, is incorporated.

Figure 4 is a schematic view (cross-sectional view) illustrating a specific example of a preferable form of the touch panel of the present invention.

In Figure 4, 4 represents a touch panel, 40 and 41 represent pressure-sensitive adhesive layers of the present invention, 42 represents an image display panel, 43 represents a touch sensor film, 44 represents a transparent substrate, and 45 represents metal wiring. In the touch panel 4, the image display panel 42, the pressure-sensitive adhesive layer 40, the touch sensor film 43, the pressure-sensitive adhesive layer 41, and the transparent substrate 44 are laminated in this order.

Since the pressure-sensitive adhesive layers 40 and 41 are composed of the pressure-sensitive adhesive layer of the present invention, in the touch panel 4, cloudiness due to humidification is unlikely to occur even if returned to normal temperature after being placed under high temperature and high humidity conditions, and excellent visibility can be maintained. One of the pressure-sensitive adhesive layers 40 and 41 does not have to be composed of the pressure-sensitive adhesive layer of the present invention.

A method for forming the metal wiring on the touch sensor film is not particularly limited, and examples thereof include a method in which a metal layer provided in advance is removed by etching or the like and a printing method.

The image display device and touch panel of the present invention may further have optical members such as wavelength plates, retardation films, and optical compensation films. These optical members may be a single optical member or a plurality of optical members. Examples of the lamination form of these optical members include, but not particularly limited to, (1) a form in which they are laminated on the optical member with pressure-sensitive adhesive layer of the present invention with the pressure-sensitive adhesive sheet of the present invention intervened therebetween, and (2) a form in which they are laminated on the optical member with pressure-sensitive adhesive layer of the present invention with a pressure-sensitive adhesive sheet other than the pressure-sensitive adhesive sheet of the present invention intervened therebetween.

## Examples

The present invention will be described hereinafter more specifically based on examples, but the present invention is not intended to be limited to these examples. The numbers of parts formulated (parts by weight) each indicate

the number of parts formulated of each component described.

[Production Example 1: Preparation of prepolymer composition A]

To a monomer mixture constituted by 51.3 parts by weight of 2-ethylhexyl acrylate (2EHA), 26.6 parts by weight of isostearyl acrylate (ISTA), 21.0 parts by weight of N-vinyl-2-pyrrolidone (NVP), and 1.1 part by weight of 4-hydroxybutyl acrylate (4-HBA), 0.04 parts by weight of a photopolymerization initiator (trade name "Omnirad 184", manufactured by IGM Resins B.V.) and 0.04 parts by weight of a photopolymerization initiator (trade name "Omnirad 651", manufactured by IGM Resins B.V.) were formulated. Then, ultraviolet was applied until the viscosity (BH viscometer No. 5 rotor, 10 rpm, measurement temperature: 30°C) reached about 20 Pa·s to thereby obtain a prepolymer composition A, in which the monomer components were partially polymerized.

[Production Example 2: Preparation of prepolymer composition B]

To a monomer mixture constituted by 67 parts by weight of butyl acrylate (BA), 14 parts by weight of cyclohexyl acrylate (CHA), and 19 parts by weight of 4-hydroxybutyl acrylate (4-HBA), 0.09 parts by weight of a photopolymerization initiator (trade name "Omnirad 184", manufactured by IGM Resins B.V.) and 0.09 parts by weight of a photopolymerization initiator (trade name "Omnirad 651", manufactured by IGM Resins B.V.) were formulated. Then, ultraviolet was applied until the viscosity (BH viscometer No. 5 rotor, 10 rpm, measurement temperature: 30°C) reached about 20 Pa·s to thereby obtain a prepolymer composition B, in which the monomer components were partially polymerized.

[Production Example 3: Preparation of prepolymer composition C]

To a monomer mixture constituted by 51.3 parts by weight of 2-ethylhexyl acrylate (2EHA), 26.6 parts by weight of isostearyl acrylate (ISTA), 15.5 parts by weight of N-vinyl-2-pyrrolidone (NVP), and 6.6 part by weight of 4-hydroxybutyl acrylate (4-HBA), 0.04 parts by weight of a photopolymerization initiator (trade name "Omnirad 184", manufactured by IGM Resins B.V.) and 0.04 parts by weight of a photopolymerization initiator (trade name "Omnirad 651", manufactured by IGM Resins B.V.) were formulated. Then, ultraviolet was applied until the viscosity (BH viscometer No. 5 rotor, 10 rpm, measurement temperature: 30°C) reached about 20 Pa·s to thereby obtain a prepolymer composition C, in which the monomer components were partially polymerized.

[Example 1]

To 100 parts by weight of the prepolymer composition A obtained in Production Example 1, 1.66 parts by weight of hydrogenated 1,2-polybutadiene (trade name "BI-3000", number average molecular weight (Mn): 4750 (found), weight average molecular weight (Mw): 6150 (found), polydispersity (Mw/Mn): 1.30 (found), hydrogenation ratio: 97% or more (catalog value), iodine value: 21 or less (catalog value), manufactured by Nippon Soda Co., Ltd.), 23.24 parts by weight of hydrogenated 1,2-polybutadiene glycol (trade name "GI-2000", number average molecular weight (Mn): 3110 (found), weight average molecular weight (Mw): 5090 (found), polydispersity (Mw/Mn): 1.64 (found), hydrogenation ratio: 93% or more (catalog value), iodine value: 21 or less (catalog value), manufactured by Nippon Soda Co., Ltd.), 0.08 parts by weight of trimethylolpropane triacrylate (TMPTA), and 0.33 parts by weight of a silane coupling agent (trade name "KBM-403", manufactured by Shin-Etsu Chemical Co., Ltd.) were added and mixed to thereby obtain a pressure-sensitive adhesive composition (composition before curing).

The pressure-sensitive adhesive composition was applied on a polyethylene terephthalate (PET) release liner (heavy release liner, trade name "MRF75", manufactured by Mitsubishi Resin Co., Ltd.) such that the final thickness (thickness of the pressure-sensitive adhesive layer) was 250 $\mu$m to form an applied layer (pressure-sensitive adhesive composition layer). Then, the applied layer was covered by providing a PET release liner (light release liner, trade name "MRE75", manufactured by Mitsubishi Resin Co., Ltd.) on the applied layer to block oxygen. A laminate of MRF75/applied layer (pressure-sensitive adhesive composition layer)/MRE75 was thus obtained.

Next, this laminate was irradiated from the top face of the laminate (MRF38 side) with ultraviolet having an illuminance of 5 mW/cm$^2$ for 300 seconds using a black light (manufactured by TOSHIBA CORPORATION). Additionally, a drying treatment was conducted in a dryer at 90°C for 2 minutes to volatilize the remaining monomers. Then, obtained was a baseless double-coated pressure-sensitive adhesive sheet that was composed only of the pressure-sensitive adhesive layer and in which both the faces of the pressure-sensitive adhesive layer were protected with the release liners.

[Example 2 and Comparative Example 1]

Each baseless double-coated pressure-sensitive adhesive sheet was obtained in the same manner as in

Example 1 except for the composition of the pressure-sensitive adhesive composition and the thickness of the pressure-sensitive adhesive layer shown in Table 1.

[Table 1]

**(Table 1)**

| Formulation | | Example 1 | Example 2 | Comparative Example 1 |
|---|---|---|---|---|
| Prepolymer composition | A | 100 | - | - |
| | B | - | 100 | - |
| | C | - | - | 100 |
| Monomer | HEA | - | 9 | - |
| | 4-HBA | - | 8 | - |
| Hydrogenated polyolefin | BI-3000 | 1.66 | - | 3 |
| | GI-2000 | 23.24 | - | 12 |
| Polyfunctional acrylate | TMPTA | 0.08 | - | 0.1 |
| | DPHA | - | 0.117 | - |
| Silane coupling agent | KBM-403 | 0.33 | 0.351 | 0.3 |
| Pressure-sensitive adhesive thickness (μm) | | 250 | 250 | 250 |

The details of the components shown in Table 1 are as follows.

(Prepolymer composition)

A: Prepolymer composition A produced in Production Example 1

B: Prepolymer composition B produced in Production Example 2

C: Prepolymer composition C produced in Production Example 3

(Monomer)

HEA: 2-hydroxyethyl acrylate
4-HBA: 4-hydroxybutyl acrylate

(Hydrogenated polyolefin)

BI-3000: trade name "BI-3000", hydrogenated 1,2-polybutadiene, number average molecular weight (Mn): 4750 (found), weight average molecular weight (Mw): 6150 (found), polydispersity (Mw/Mn): 1.30 (found), hydrogenation ratio: 97% or more (catalog value), iodine value: 21 or more (catalog value), manufactured by Nippon Soda Co., Ltd.
GI-2000: trade name "GI-2000", hydrogenated 1,2-polybutadiene glycol, number average molecular weight (Mn): 3110 (found), weight average molecular weight (Mw): 5090 (found), polydispersity (Mw/Mn): 1.64 (found), hydrogenation ratio: 97% or more (catalog value), iodine value: 21 or less (catalog value), manufactured by Nippon Soda Co., Ltd.

(Polyfunctional acrylate)

TMPTA: trimethylolpropane triacrylate
DPHA: dipentaerythritol hexaacrylate

(Silane coupling agent)

KBM-403: trade name "KBM-403", 3-glycidoxypropyltrimethoxysilane, manufactured by Shin-Etsu Chemical Co., Ltd.

The founds of the number average molecular weight (Mn), weight average molecular weight (Mw), and polydispersity (Mw/Mn) of the hydrogenated polyolefins and hydrogenated polyolefin glycol were determined from values obtained by measurement by GPC (gel permeation chromatography) under the following conditions and calculation in terms of polystyrene.
Analysis apparatus: GPC: HLC-8320GPC (TOSOH CORPORATION)

Measurement conditions:

Column: TSKgel Super HZM-H/HZ4000/HZ3000/HZ2000
Column size: 6.0 mm I.D. × 150 mm
Eluent: THF (tetrahydrofuran)
Flow rate: 0.6 mL/min
Detector: differential refractometer (RI)
Column temperature: 40°C
Amount injected: 20 μL

The molecular weights were calculated in terms of polystyrene.

[Evaluation of characteristics]

The following measurements and evaluations were conducted on the baseless double-coated pressure-sensitive adhesive sheets of Examples and Comparative Examples. The evaluation results were shown in Table 2.

(1) Measurement and evaluation of moisture amounts ($W_1$, $W_2$, and $W_3$) and cloudiness due to humidification

The baseless double-coated pressure-sensitive adhesive sheets of Examples and Comparative Example were stored under each of the following storage conditions (A), (B), and (C), then the sheets were weighed, and placed in a heating vaporizer (manufactured by Nittoseiko Analytech Co., Ltd., model VA-200). The gas generated by heating to 150°C was introduced into a titration cell, and the moisture amount ($\mu g/cm^2$) was measured with a coulometric titration type moisture meter (manufactured by Nittoseiko Analytech Co., Ltd., model CA-200):

(A) the moisture amount when stored under conditions of 23°C and 50% RH for 24 hours: $W_1$ ($\mu g/cm^2$);
(B) the moisture amount when, after (A), stored under conditions of 85°C and 85% RH for 8 hours and then stored under conditions of 23°C and 50% RH for 24 hours: $W_2$ ($\mu g/cm^2$); and
(C) the moisture amount when, after (A), stored under conditions of 85°C and 85% RH for 8 hours: $W_3$ ($\mu g/cm^2$).

Also, the samples were visually evaluated for the presence or absence of cloudiness after storage under the condition (B) described above (cloudiness due to humidification).

(2) Measurement of halogen ion content

The baseless double-coated pressure-sensitive adhesive sheets of Examples and Comparative Example were cut into pieces of 10 mm or more in diameter and 1 mm or more in thickness, and if a release liner was provided, the release liner was separated to expose the surface of the pressure-sensitive adhesive layer (may be referred to as "the adhesive face") to prepare test pieces.

The test pieces described above were analyzed with an energy dispersive X-ray fluorescence spectrometer (EDX-7000 manufactured by Shimadzu Corporation), and the amount of halogen ion (ppm) was determined using a screening kit for the device.

(3) Measurement of acrylic acid ion content

The baseless double-coated pressure-sensitive adhesive sheets of Examples and Comparative Example were cut to an appropriate size, and if a release liner was provided, the release liner was separated to expose the surface of the pressure-sensitive adhesive layer (may be referred to as "the adhesive face") to prepare test pieces. The size of the test pieces (exposed area of the adhesive face) was 100 $cm^2$.

Then, the test pieces described above were placed in pure water at a temperature of 100°C and boiled for 45 minutes to extract acrylic acid ions and methacrylic acid ions by boiling.

Then, the total amount of acrylic acid ions and methacrylic acid ions (unit: ng) in the extraction liquid obtained as described above was measured by the ion chromatograph method (ion chromatography), and the total amount of acrylic acid ions and methacrylic acid ions per unit area of the adhesive face (exposed adhesive face) of the test pieces (unit: $ng/cm^2$) was calculated. The measurement conditions for the ion chromatograph method (ion chromatography) were as follows.

[Measurement conditions for ion chromatograph method]

Analysis apparatus: manufactured by Dionex Corporation, DX-320
Separation column: IonPac AS15 (4 mm × 250 mm)
Guard column: IonPac AG15 (4 mm × 50 mm)
Removal system: ASRS-ULTRA (external mode, 100 mA)
Detector: conductivity detector
Eluent: 7 mM KOH (0 to 20 min)
45 mM KOH (20 to 30 min)
(using eluent generator EG40)
Eluent flow rate: 1.0 ml/min
Sample injection volume: 250 μl

(4) Measurement of dielectric constant

The pressure-sensitive adhesive layers obtained by separating the release liner from the baseless double-coated pressure-sensitive adhesive sheets obtained in Examples and Comparative Example were sandwiched between a copper foil and an electrode, and the relative permittivity was measured at a frequency of 100 kHz with the following apparatus. Three samples were prepared for the measurement, and the average of the measured values for those three samples was used as the relative permittivity.

The relative permittivity of the pressure-sensitive adhesive layers at a frequency of 100 kHz was measured in accordance with JIS K 6911 under the following conditions.

Measurement method: capacitance method (apparatus: Agilent Technologies 4294A Precision Impedance Analyzer)

Electrode configuration: 12.1 mmΦ, 0.5 mm thick aluminum plate

Counter electrode: 3 oz copper plate

Measurement environment: 23 ± 1°C, 52 ± 1% RH

[Table 2]

(Table 2)

| | Moisture amount (μg/cm²) | | | $W_2/W_1$ | $W_3/W_1$ | Presence/absence of cloudiness due to humidification | Halogen ion content (ppm) | | | Amount of acrylic acid ion (ng/cm²) | Dielectric constant (100 kHz) |
|---|---|---|---|---|---|---|---|---|---|---|---|
| | $W_1$ | $W_3$ | $W_2$ | | | | Chlorine | Bromine | Total | | |
| Example 1 | 121 | 329 | 147 | 1.21 | 2.72 | Absent | 26.4 | 0.6 | 27 | 0.43 | 3.0 |
| Example 2 | 303 | 770 | 396 | 1.31 | 2.54 | Absent | 21.6 | 0.6 | 22.2 | 0.03 | 6.8 |
| Comparative Example 1 | 116 | 266 | 110 | 0.95 | 2.29 | Present | 21.6 | 0.6 | 22.2 | 0.03 | 3.2 |

Variations of the present invention will be attached below.

[Attachment 1]

An acrylic pressure-sensitive adhesive composition for forming a pressure-sensitive adhesive layer used for laminating an optical member of an image display device, wherein
moisture amounts $W_1$ and $W_2$ after subjecting the pressure-sensitive adhesive layer to conditions (A) and (B) below, respectively, satisfy the following expression (1):

$$W_2/W_1 > 1 \quad ... \quad (1)$$

(A) a moisture amount when the pressure-sensitive adhesive layer is stored under conditions of 23°C and 50% RH for 24 hours: $W_1$ ($\mu g/cm^2$); and
(B) a moisture amount when the pressure-sensitive adhesive layer after (A) is stored under conditions of 85°C and 85% RH for 8 hours and then stored under conditions of 23°C and 50% RH for 24 hours: $W_2$ ($\mu g/cm^2$).

[Attachment 2]

The acrylic pressure-sensitive adhesive composition according to attachment 1, wherein moisture amounts $W_1$ and $W_3$ after subjecting the pressure-sensitive adhesive layer to conditions (A) and (C) below, respectively, satisfy the following expression (2):

$$W_3/W_1 > 2.3 \quad ... \quad (2)$$

(A) a moisture amount when the pressure-sensitive adhesive layer is stored under conditions of 23°C and 50% RH for 24 hours: $W_1$ ($\mu g/cm^2$); and
(C) a moisture amount when the pressure-sensitive adhesive layer after (A) is stored under conditions of 85°C and 85% RH for 8 hours: $W_3$ ($\mu g/cm^2$).

[Attachment 3]

The acrylic pressure-sensitive adhesive composition according to attachment 1 or 2, wherein

the acrylic pressure-sensitive adhesive composition comprises an acrylic polymer, and
the acrylic polymer contains 10 to 40 parts by weight of a functional group-containing monomer based on a total amount of monomer components constituting the acrylic polymer (100 parts by weight).

[Attachment 4]

The acrylic pressure-sensitive adhesive composition according to any one of attachments 1 to 3, having a halogen ion concentration of 50 ppm or less.

[Attachment 5]

A pressure-sensitive adhesive layer formed of the acrylic pressure-sensitive adhesive composition according to any one of attachments 1 to 4.

[Attachment 6]

The pressure-sensitive adhesive layer according to attachment 5, having a dielectric constant at a frequency of 100 kHz of 4 or less.

[Attachment 7]

A pressure-sensitive adhesive sheet comprising the pressure-sensitive adhesive layer according to attachment 5 or 6.

[Attachment 8]

An optical member with pressure-sensitive adhesive layer, wherein the pressure-sensitive adhesive sheet according to attachment 7 is laminated on at least one face of the optical member.

[Attachment 9]

An image display device comprising the optical member with pressure-sensitive adhesive layer according to attachment 8.

[Attachment 10]

The image display device according to attachment 9, which is a touch panel.

Reference Signs List

1 pressure-sensitive adhesive sheet
10 pressure-sensitive adhesive layer
11, 12 release liner
2A optical member with pressure-sensitive adhesive layer
2B touch sensor film with pressure-sensitive adhesive layer
20 pressure-sensitive adhesive layer
21 optical member
22 release liner
23 touch sensor film
24 metal wiring
3 image display device
30, 31 pressure-sensitive adhesive layer
32 image display panel
33 polarizing film
34 transparent substrate
4 touch panel
40, 41 pressure-sensitive adhesive layer
42 image display panel
43 touch sensor film
44 transparent substrate
45 metal wiring

## Claims

1. An acrylic pressure-sensitive adhesive composition for forming a pressure-sensitive adhesive layer used for laminating an optical member of an image display device, wherein
moisture amounts $W_1$ and $W_2$ after subjecting the pressure-sensitive adhesive layer to conditions (A) and (B) below, respectively, satisfy the following expression (1):

$$W_2/W_1 > 1 \ldots (1)$$

(A) a moisture amount when the pressure-sensitive adhesive layer is stored under conditions of 23°C and 50% RH for 24 hours: $W_1$ (μg/cm$^2$); and
(B) a moisture amount when the pressure-sensitive adhesive layer after (A) is stored under conditions of 85°C and 85% RH for 8 hours and then stored under conditions of 23°C and 50% RH for 24 hours: $W_2$ (μg/cm$^2$).

2. The acrylic pressure-sensitive adhesive composition according to claim 1, wherein moisture amounts $W_1$ and $W_3$ after subjecting the pressure-sensitive adhesive layer to conditions (A) and (C) below, respectively, satisfy the following

expression (2):

$$W_3/W_1 > 2.3 \ldots (2)$$

(A) a moisture amount when the pressure-sensitive adhesive layer is stored under conditions of 23°C and 50% RH for 24 hours: $W_1$ (μg/cm$^2$); and
(C) a moisture amount when the pressure-sensitive adhesive layer after (A) is stored under conditions of 85°C and 85% RH for 8 hours: $W_3$ (μg/cm$^2$).

**3.** The acrylic pressure-sensitive adhesive composition according to claim 1 or 2, wherein

the acrylic pressure-sensitive adhesive composition comprises an acrylic polymer, and
the acrylic polymer contains 10 to 40 parts by weight of a functional group-containing monomer based on a total amount of monomer components constituting the acrylic polymer (100 parts by weight).

**4.** The acrylic pressure-sensitive adhesive composition according to any one of claims 1 to 3, having a halogen ion concentration of 50 ppm or less.

**5.** A pressure-sensitive adhesive layer formed of the acrylic pressure-sensitive adhesive composition according to any one of claims 1 to 4.

**6.** The pressure-sensitive adhesive layer according to claim 5, having a dielectric constant at a frequency of 100 kHz of 4 or less.

**7.** A pressure-sensitive adhesive sheet comprising the pressure-sensitive adhesive layer according to claim 5 or 6.

**8.** An optical member with pressure-sensitive adhesive layer, wherein the pressure-sensitive adhesive sheet according to claim 7 is laminated on at least one face of the optical member.

**9.** An image display device comprising the optical member with pressure-sensitive adhesive layer according to claim 8.

**10.** The image display device according to claim 9, which is a touch panel.

Fig. 1

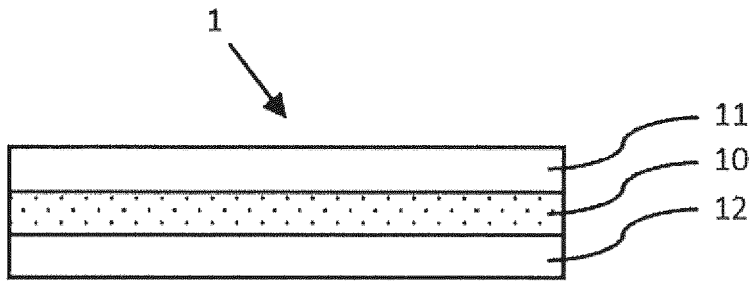


Fig. 2

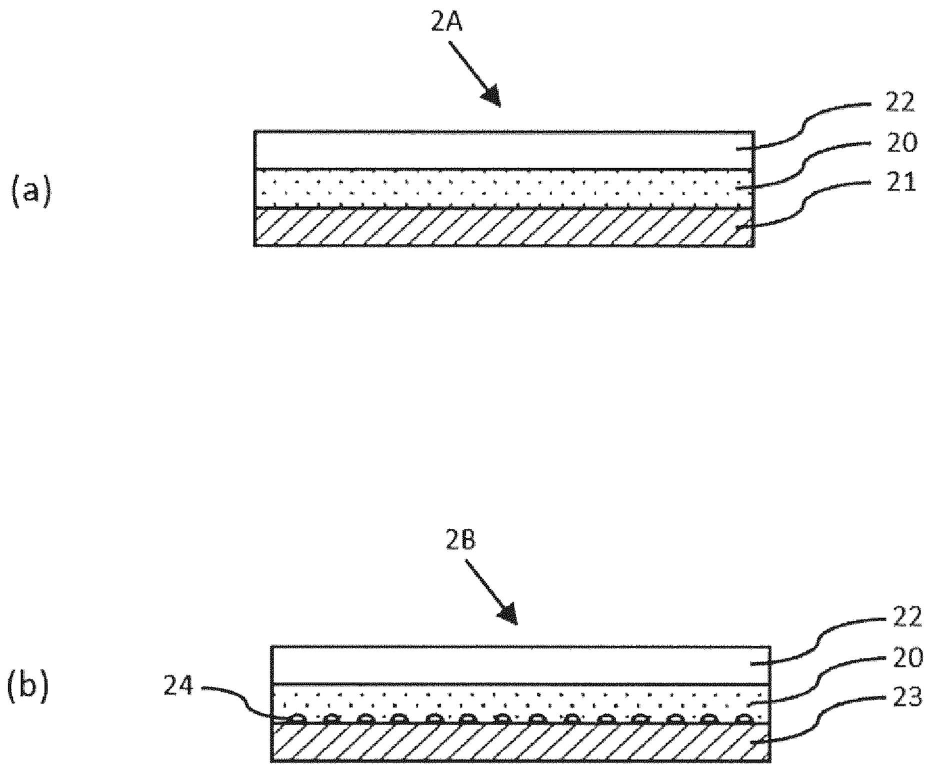

Fig. 3

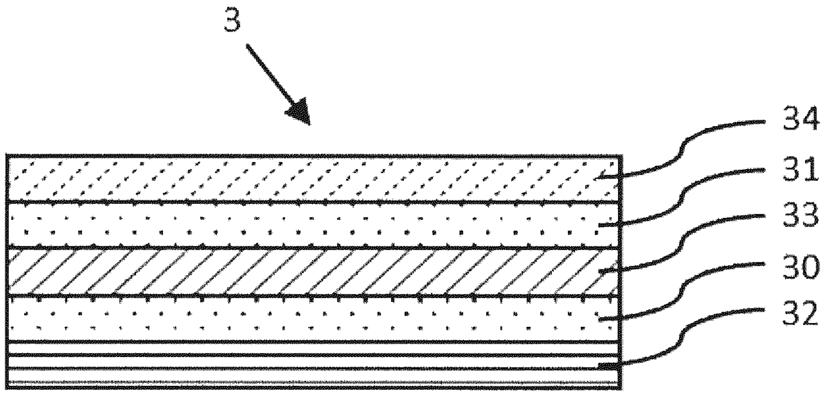


Fig. 4

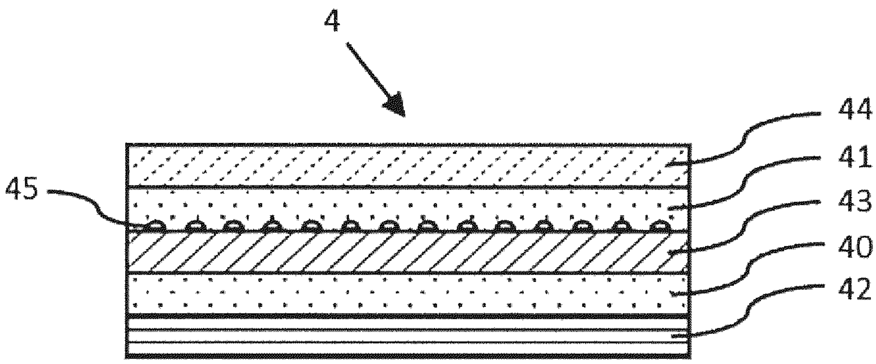

## INTERNATIONAL SEARCH REPORT

International application No.
**PCT/JP2023/029451**

**A. CLASSIFICATION OF SUBJECT MATTER**

***C09J 133/00***(2006.01)i; ***C09J 7/38***(2018.01)i
FI: C09J133/00; C09J7/38

According to International Patent Classification (IPC) or to both national classification and IPC

**B. FIELDS SEARCHED**

Minimum documentation searched (classification system followed by classification symbols)

C09J133/00; C09J7/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/251435 A1 (NITTO DENKO CORP.) 16 December 2021 (2021-12-16) claims, paragraphs [0073]-[0144], [0219]-[0231], examples 1-5 | 1-10 |
| X | WO 2021/251437 A1 (NITTO DENKO CORP.) 16 December 2021 (2021-12-16) claims, paragraphs [0065]-[0136], [0216]-[0228], examples 1-5 | 1-10 |
| X | JP 2011-99078 A (NITTO DENKO CORP.) 19 May 2011 (2011-05-19) claims, paragraphs [0006], [0024]-[0056], [0074]-[0085], [0091], example 1 | 1-10 |
| X | JP 2014-12808 A (NITTO DENKO CORP.) 23 January 2014 (2014-01-23) claims, paragraphs [0017]-[0046], [0117]-[0119], examples 6-9, 11, 12, 14 | 1-10 |
| P, X | JP 2023-47296 A (NITTO DENKO CORP.) 05 April 2023 (2023-04-05) claims, paragraphs [0058]-[0136], [0195]-[0208], examples 1, 7-10 | 1-10 |
| P, X | JP 2023-47297 A (NITTO DENKO CORP.) 05 April 2023 (2023-04-05) claims, paragraphs [0057]-[0135], [0194]-[0207], examples 1, 7-10 | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 September 2023** | **26 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/029451**

| Patent document cited in search report | Publication date (day/month/year) | Patent family member(s) | Publication date (day/month/year) |
|---|---|---|---|
| WO 2021/251435 A1 | 16 December 2021 | US 2023/00220247 A1<br>claims, paragraphs [0093]-[0167], [0246]-[0258], examples 1-5<br>JP 2021-195448 A<br>EP 4166323 A1<br>CN 115702227 A<br>KR 10-2023-0024348 A<br>TW 202204551 A | |
| WO 2021/251437 A1 | 16 December 2021 | US 2023/0220248 A1<br>claims, paragraphs [0091]-[0164], [0246]-[0258], examples 1-5<br>JP 2021-195449 A<br>EP 4166321 A1<br>CN 115698214 A<br>KR 10-2023-0024349 A<br>TW 202204449 A | |
| JP 2011-99078 A | 19 May 2011 | US 2011/0112249 A1<br>claims, paragraphs [0005], [0030]-[0064], [0082]-[0096], [0106], example 1<br>EP 2325276 A1<br>CN 102051132 A<br>KR 10-2011-0051150 A<br>TW 201134897 A | |
| JP 2014-12808 A | 23 January 2014 | US 2013/0289210 A1<br>claims, paragraphs [0032]-[0075], [0176]-[0178], examples 6-9, 11, 12, 14<br>KR 10-2013-0121759 A<br>CN 103374274 A<br>TW 201402744 A | |
| JP 2023-47296 A | 05 April 2023 | US 2023/0099594 A1<br>claims, paragraphs [0076]-[0156], [0216]-[0229], examples 1, 7-10<br>EP 4155357 A1<br>CN 115895456 A<br>KR 10-2023-0043738 A | |
| JP 2023-47297 A | 05 April 2023 | US 2023/0102451 A1<br>claims, paragraphs [0071]-[0151], [0210]-[0223], examples 1, 7-10<br>EP 4155358 A1<br>CN 115895492 A<br>KR 10-2023-0043739 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003238915 A
- JP 2003342542 A
- JP 2004231723 A
- JP 2002069411 A